# EUROPEAN PATENT APPLICATION

(11) **EP 2 866 052 A1**
(43) Date of publication of application: **29.04.2015**
(21) Application number: 13189868.6
(22) Date of filing: 23.10.2013
(51) Int. Cl.: G01S 17/89, G01S 13/86

(54) **A system for monitoring a maritime environment**

(71) Applicant: Ladar Limited, George Hill (AI)
(72) Inventor: Hjelmstad, Jens, 2000 Lillestrom (NO)
(74) Representative: Klinski, Robert

(57) **Abstract**

The invention relates to a system (100) for monitoring a maritime environment, the system (100) comprising a plurality of detection devices (107, 109) for detecting objects in the maritime environment, the detection devices (107, 109) being configured for object detection according to different object detection schemes, and a data processing device (101), comprising a communication interface (103) and a processor (105), wherein the communication interface (103) is configured to receive detection signals from the detection devices (107, 109), and wherein the processor (105) is configured to determine locations of the objects in the maritime environment upon the basis of the received detection signals within a common coordinate system.

## Description

### TECHNICAL FIELD

The present invention relates to maritime environmental monitoring.

### BACKGROUND OF THE INVENTION

For monitoring a maritime environment, detection devices of different complexities can be used. Common detection devices can e.g. comprise sound navigation and ranging (sonar) devices or radio detection and ranging (radar) devices.

Usually, a separate user interface is provided by each detection device. For example, there can be a display showing the depth relative to the seabed detected by a sound navigation and ranging device and another display showing objects detected by a radio detection and ranging device. The maritime environment is therefore monitored independently by different detection devices.

Since the detection devices can be adapted to monitor the maritime environment based on different object detection schemes and/or physical principles, information obtained by one detection device may not be obtained by another detection device. A radio detection and ranging device may e.g. be adapted to monitor the maritime environment over long ranges on the water surface whereas a sound navigation and ranging device may e.g. be adapted to monitor the maritime environment at short ranges under the water surface.

Information about the maritime environment is further displayed by different displaying schemes, such as cluster points in case of a radio detection and ranging device or a color-coded range profile in case of a sound navigation and ranging device.

The interpretation of the obtained information is usually performed by different operators. Monitoring the maritime environment is therefore based on combining the obtained information manually. This approach for monitoring the maritime environment can be error-prone and can pose a significant cognitive strain on the operators.

### SUMMARY OF THE INVENTION

It is therefore the object of the invention to provide an improved concept for monitoring a maritime environment.

This object is achieved by the features of the independent claims. Further implementation forms are apparent from the dependent claims, the description and the figures.

The invention is based on the finding that a plurality of detection devices based on different object detection schemes can be employed and that detection signals from the detection devices can jointly be processed. The detected objects can be displayed within a common coordinate system, in particular a 3-dimensional Cartesian coordinate system. Additionally, object information about detected objects and environmental information can be displayed within the same common coordinate system. This way, monitoring the maritime environment can be performed by a single operator. The displaying within the common coordinate system can provide a comprehensive and intuitive way for the operator to monitor the maritime environment.

According to an aspect, the invention relates to a system for monitoring a maritime environment, the system comprising a plurality of detection devices for detecting objects in the maritime environment, the detection devices being configured for object detection according to different object detection schemes, and a data processing device, comprising a communication interface and a processor, wherein the communication interface is configured to receive detection signals from the detection devices, and wherein the processor is configured to determine locations of the objects in the maritime environment upon the basis of the received detection signals within a common coordinate system.

The maritime environment can relate to the environment of a marine seagoing vessel, e.g. a ship, or a marine stand-still platform, e.g. an oil production platform, an oil platform, and/or a gas platform. The maritime environment can further relate to the environment of a marine harbor or marine port.

The detection devices can be configured to detect objects on the water surface, above the water surface, or under the water surface.

The different object detection schemes can relate to different physical principles for object detection, e.g. using electromagnetic waves, laser beams, acoustic waves, or visual images. The different object detection schemes can further relate to different detection principles for object detection, e.g. active detection or passive detection.

The objects can be marine seagoing vessels, e.g. ships, or marine stand-still platforms, e.g. oil production platforms. The objects can further be floating or submerged obstacles. The objects can further be oil slicks, dispersed oil spills and/or gas leakages.

The data processing device can e.g. be a computer. The communication interface can be configured to receive detection signals according to a predetermined format, e.g. a format defined by the National Marine Electronics Association (NMEA). The communication interface can further be configured to receive radio frequency signals, e.g. Automatic Identification System (AIS) signals. The processor can be configured to execute a computer program.

The common coordinate system can be a 2-dimensional or a 3-dimensional coordinate system. The common coordinate system can further be a Cartesian or a spherical coordinate system.

According to an implementation form, the plurality of detection devices comprises at least one of the following detection devices: a laser detection and ranging device, a radio detection and ranging device, a sound navigation and ranging device, a thermal sensor device, an infrared sensor device, a multi-spectral sensor device, a hyper-spectral sensor device, a visual band imager, or a camera. Thus, detection devices adapted for detecting objects in the maritime environment can be employed.

The laser detection and ranging device can be configured to detect the objects upon the basis of transmitted and reflected laser beams. The radio detection and ranging device can be configured to detect the objects upon the basis of transmitted and reflected electromagnetic waves.

The sound navigation and ranging device can be configured to detect the objects upon the basis of received acoustic waves. The sound navigation and ranging device can further be configured to detect the objects upon the basis of transmitted and reflected acoustic waves.

The thermal sensor device can be configured to detect the objects upon the basis of heat radiation transmitted from the objects. The infrared sensor device can be configured to detect the objects upon the basis of infrared radiation transmitted from the objects.

The multi-spectral sensor device can be configured to detect the objects upon the basis of radiation transmitted from the objects in multiple frequency bands. The hyper-spectral sensor device can be configured to detect the objects upon the basis of radiation transmitted from the objects over a continuous frequency band.

The visual band imager can be configured to detect the objects upon the basis of radiation transmitted from the objects in a visual frequency band. The camera can be configured to detect the objects upon the basis of a photo or image.

According to an implementation form, the communication interface is further configured to receive a location signal indicating a location of an object via a communication network, and wherein the processor is further configured to determine the location of the object in the maritime environment upon the basis of the location signal within the common coordinate system. Thus, the location of objects detected by remote detection devices and the location of objects listed in remote databases, e.g. AIS-related databases, can be determined within the common coordinate system.

The location signal can be an Automatic Identification System (AIS) signal. The location signal can comprise object information associated to the object. The communication network can be a network of radio repeaters or the Internet.

According to an implementation form, the processor is further configured to determine a speed, a change of speed, a heading, or a change of heading of the objects. Thus, a behavioral model of the objects can be derived.

According to an implementation form, the processor is further configured to determine a dispersion of oil, e.g. an oil slick or a dispersed oil spill, in the maritime environment. Thus, a behavioral model of oil in the maritime environment can be derived.

According to an implementation form, the processor is further configured to determine an estimate of a location of an object with regard to a predetermined future time instant. Thus, a potential impact and/or collision of the objects can be determined.

The predetermined future time instant can have a predetermined time offset with regard to a current time instant. The predetermined time offset can e.g. be 1 s, 5s, 10s, 20s, 30s, 1min, or 1h.

The processor can determine the estimate and/or prediction of the location upon the basis of a behavioral model and/or object information.

According to an implementation form, the processor is further configured to determine a presence of an object within a predetermined alarm zone, wherein the processor is further configured to generate an alarm signal if the object is present within the predetermined alarm zone. Thus, a presence of an object within the alarm zone can be signaled.

The predetermined alarm zone can relate to an area or volume within the maritime environment on, above, or under the water surface. The alarm signal can be further processed and/or displayed.

According to an implementation form, the system further comprises a display device, wherein the display device is configured to display the locations of the objects in the maritime environment within the common coordinate system. Thus, the maritime environment can intuitively be monitored by a single operator.

The display device can be a monitor or a screen. The display device can further display system information, such as system parameters or system health information. The display device can further display information of further sensors, e.g. speed sensors or compasses. The displayed locations of the objects can be panned, rotated, and/or zoomed on the display device. The display device can provide a graphical user interface.

According to an implementation form, the communication interface is further configured to receive a signal indicating environmental information, in particular meteorological and oceanographic information, via a communication network, wherein the display device is configured to display the environmental information within the common coordinate system. Thus, environmental information of remote environmental sensors can be displayed within the common coordinate system.

The signal indicating the environmental information can be a radio frequency signal. The communication network can be a network of radio repeaters or the Internet.

The environmental information can comprise sea state and sea ice state information, such as sea ice concentration, sea ice drift data, sea ice edge data and iceberg data.

The meteorological and oceanographic (metocean) information can comprise information about temperature, pressure, water depth, and/or water currents. The meteorological and oceanographic (metocean) information can further comprise information about weather, such as sea state, wind, waves, e.g. propagation speed, heading, period, height, and wave spectrum, sea surface temperature, fronts, eddies, current shear, internal waves, and/or further oceanographic features.

According to an implementation form, the communication interface is further configured to receive a signal indicating object information, in particular an object identification, via a communication network, wherein the object information is associated to an object in the maritime environment, and wherein the display device is configured to display the object information. Thus, object information listed in remote databases can be displayed.

The signal indicating the object information can be a radio frequency signal. The communication network can be a network of radio repeaters or the Internet.

The object information can comprise depth information, positional information, shape information, size information, and/or behavioral information. The object information can further comprise an object identification, such as an identification number.

According to an implementation form, the common coordinate system is a 3-dimensional Cartesian coordinate system. Thus, a 3-dimensional spatial visualization of the maritime environment can be provided.

The 3-dimensional Cartesian coordinate system can comprise an x-axis, a y-axis, and a z-axis. The processor can be configured to determine the locations of the objects within the 3-dimensional Cartesian coordinate system.

According to an implementation form, at least one of the plurality of detection devices is configured to scan the maritime environment on or above the water surface, in particular to detect objects on or above the water surface, for providing a detection signal. Thus, the maritime environment on or above the water surface can be monitored.

By scanning the maritime environment on or above the water surface, objects on or above the water surface can be detected. The scanning can be performed according to a predetermined scanning pattern, e.g. a horizontal scanning pattern or a vertical scanning pattern. The scanning can further be performed within a predetermined scanning area, e.g. within a predetermined azimuth range and/or elevation range.

According to an implementation form, at least one of the plurality of detection devices is configured to scan the maritime environment under the water surface, in particular to detect objects under the water surface, for providing a detection signal. Thus, the maritime environment under the water surface can be monitored.

By scanning the maritime environment under the water surface, objects under the water surface can be detected. The scanning can be performed according to a predetermined scanning pattern, e.g. a horizontal scanning pattern or a vertical scanning pattern. The scanning can further be performed within a predetermined scanning area, e.g. within a predetermined azimuth range and/or elevation range.

According to an implementation form, at least one of the plurality of detection devices is configured to successively or simultaneously detect objects in the maritime environment for providing a detection signal. Thus, the objects in the maritime environment can be detected efficiently.

The detection signal can indicate the location of the successively or simultaneously detected objects. The location of the detected objects can be updated continuously.

According to an aspect, the invention relates to a method for monitoring a maritime environment, the method comprising detecting objects in the maritime environment according to different object detection schemes, receiving detection signals, and determining locations of the objects in the maritime environment upon the basis of the received detection signals within a common coordinate system.

The method for monitoring the maritime environment can be performed by the system for monitoring the maritime environment.

Further features of the method for monitoring the maritime environment can directly result from the functionality of the system for monitoring the maritime environment.

According to an implementation form, the method further comprises displaying the locations of the objects in the maritime environment within the common coordinate system. Thus, the maritime environment can intuitively be monitored by a single operator.

According to an aspect, the invention relates to a computer program for performing the method when executed on a computer. Thus, the method can be applied in an automatic and repeatable manner.

The computer program can be provided in form of a machine-readable code. The computer program can comprise a series of commands for a processor of the computer. The processor of the computer can be configured to execute the computer program. The computer can comprise a processor, a memory, and/or input/output means.

The computer program can be executed by the processor of the data processing device.

The invention can be implemented in hardware and/or software.

### BRIEF DESCRIPTION OF THE DRAWINGS

Further implementation forms of the invention will be described with respect to the following figures, in which:
- Fig. 1: shows a schematic diagram of a system for monitoring a maritime environment according to an implementation form;
- Fig. 2: shows a schematic diagram of a method for monitoring a maritime environment according to an implementation form;
- Fig. 3: shows two schematic diagrams of a monitoring scenario for monitoring a maritime environment according to an implementation form;
- Fig. 4: shows a schematic diagram of subsystems of a system for monitoring a maritime environment according to an implementation form;
- Fig. 5: shows a schematic diagram of a sensor unit of a system for monitoring a maritime environment according to an implementation form;
- Fig. 6: shows a schematic diagram of a data processor unit of a system for monitoring a maritime environment according to an implementation form;
- Fig. 7: shows a schematic diagram of a display unit of a system for monitoring a maritime environment according to an implementation form;
- Fig. 8: shows a schematic diagram of a system console unit of a system for monitoring a maritime environment according to an implementation form;
- Fig. 9: shows a schematic diagram of interfaces of a system for monitoring a maritime environment according to an implementation form;
- Fig. 10: shows a schematic diagram of sensor components of a sensor unit according to an implementation form;
- Fig. 11: shows a schematic diagram of processing components of a sensor unit according to an implementation form;
- Fig. 12: shows a schematic diagram of a cross-section of a laser beam according to an implementation form;
- Fig. 13: shows a schematic diagram of a radar coverage area of a sensor unit according to an implementation form;
- Fig. 14: shows a schematic diagram of a ladar coverage area of a sensor unit according to an implementation form;
- Fig. 15: shows a schematic diagram of a ladar coverage area of a sensor unit according to an implementation form;
- Fig. 16: shows a schematic diagram of a visual band coverage area of a sensor unit according to an implementation form;
- Fig. 17: shows a schematic diagram of an infrared coverage area of a sensor unit according to an implementation form;
- Fig. 18: shows a schematic diagram of a laser beam refraction for detecting an object under a water surface by a laser detection and ranging device according to an implementation form;
- Fig. 19: shows a schematic diagram of an object detection scheme for detecting an object under a water surface by a laser detection and ranging device according to an implementation form;
- Fig. 20: shows a schematic diagram of an object detection scheme for detecting an object under a water surface by a laser detection and ranging device according to an implementation form; and
- Fig. 21: shows a schematic diagram of possible locations of detection devices of a system for monitoring a maritime environment according to an implementation form.

### DETAILED DESCRIPTION OF THE DRAWINGS

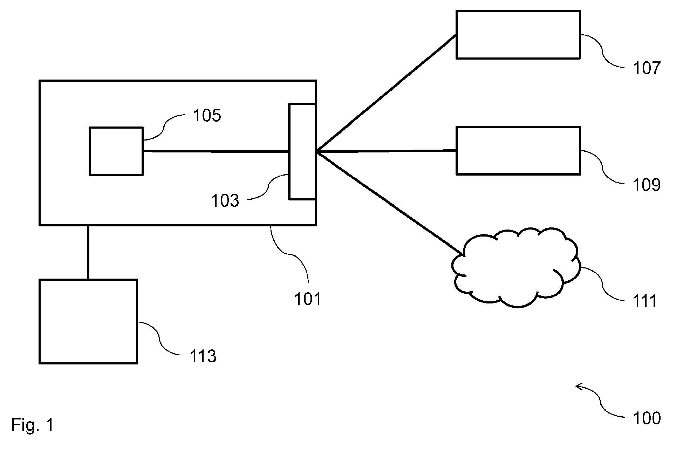

Fig. 1 shows a schematic diagram of a system 100 for monitoring a maritime environment according to an implementation form.

The system 100 comprises a plurality of detection devices 107, 109 for detecting objects in the maritime environment, the detection devices 107, 109 being configured for object detection according to different object detection schemes, and a data processing device 101, comprising a communication interface 103 and a processor 105, wherein the communication interface 103 is configured to receive detection signals from the detection devices 107, 109, and wherein the processor 105 is configured to determine locations of the objects in the maritime environment upon the basis of the received detection signals within a common coordinate system.

The system 100 further comprises a communication network 111 for providing a location signal indicating a location of an object, a signal indicating environmental information, and/or a signal indicating object information.

The system 100 further comprises a display device 113 connected to the data processing device 101 for displaying the locations of the objects in the maritime environment within the common coordinate system.

The maritime environment can relate to the environment of a marine seagoing vessel, e.g. a ship, or a marine stand-still platform, e.g. an oil production platform, an oil platform, and/or a gas platform. The maritime environment can further relate to the environment of a marine harbor or marine port.

The detection devices 107, 109 can be configured to detect objects on the water surface, above the water surface, or under the water surface. The different object detection schemes can relate to different physical principles for object detection, e.g. using electromagnetic waves, laser beams, or acoustic waves.

The objects can be marine seagoing vessels, e.g. ships, or marine stand-still platforms, e.g. oil production platforms. The objects can further be floating or submerged obstacles. The objects can further be oil slicks, dispersed oil spills and/or gas leakages.

The data processing device 101 can e.g. be a computer. The communication interface 103 can be configured to receive detection signals according to a predetermined format, e.g. a format defined by the National Marine Electronics Association (NMEA). The communication interface 103 can further be configured to receive radio frequency signals, e.g. Automatic Identification System (AIS) signals. The processor 105 can be configured to execute a computer program.

The common coordinate system can be a 2-dimensional or a 3-dimensional coordinate system. The common coordinate system can further be a Cartesian or a spherical coordinate system.

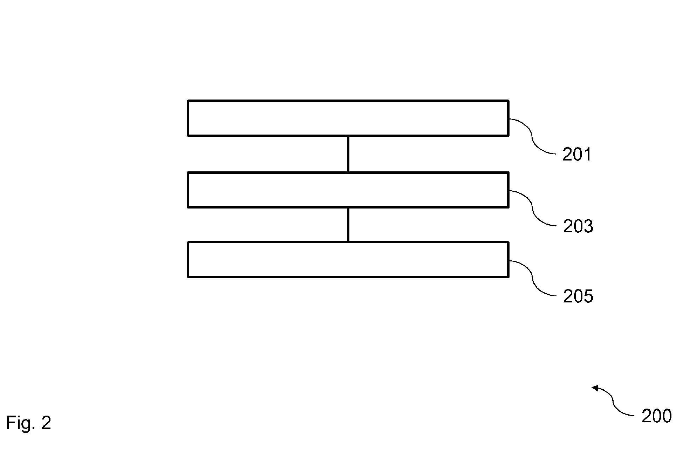

Fig. 2 shows a schematic diagram of a method 200 for monitoring a maritime environment according to an implementation form.

The method 200 comprises detecting 201 objects in the maritime environment according to different object detection schemes, receiving 203 detection signals, and determining 205 locations of the objects in the maritime environment upon the basis of the received detection signals within a common coordinate system.

The method 200 for monitoring the maritime environment can be performed by the system for monitoring the maritime environment.

Further features of the method 200 for monitoring the maritime environment can directly result from the functionality of the system for monitoring the maritime environment.

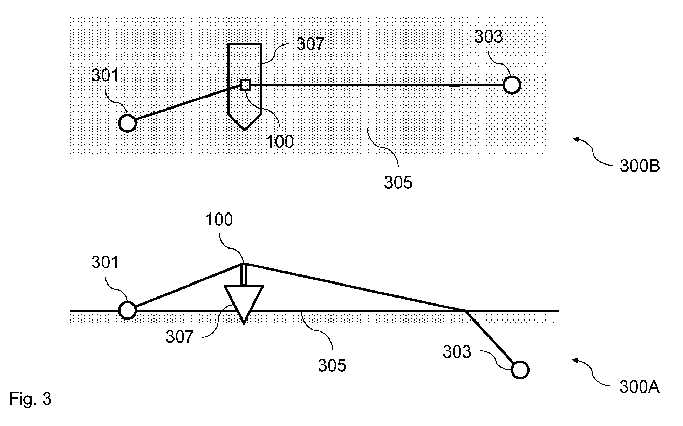

Fig. 3 shows two schematic diagrams 300A, 300B of a monitoring scenario for monitoring a maritime environment according to an implementation form.

The two diagrams 300A, 300B comprise a first object 301, a second object 303, a water surface 305, and a marine seagoing vessel 307. The system 100 is mounted on the marine seagoing vessel 307.

The first object 301 is located on the water surface 305 and is detected by a detection device of the plurality of detection devices of the system 100. The second object 303 is located under the water surface 305 and is detected by a detection device of the plurality of detection devices of the system 100.

The diagram 300A illustrates the monitoring scenario from a side view. The diagram 300B illustrates the monitoring scenario from a top view.

The first object 301 can be a marine seagoing vessel, e.g. a ship, or a marine stand-still platform, e.g. an oil production platform. The first object 301 can further be a floating obstacle, e.g. a container. The first object 301 can further be an oil slick, a dispersed oil spill and/or a gas leakage.

The second object 303 can be a submerged obstacle. The second object 303 can further be an oil slick, a dispersed oil spill and/or a gas leakage.

The water surface 305 can be defined as the surface layer between water and air.

The marine seagoing vessel 307 can e.g. be a ship.

The maritime environment can be monitored using the system 100 for monitoring the maritime environment. The system 100 comprises a plurality of detection devices for detecting objects 301, 303 in the maritime environment, the detection devices being configured for object detection according to different object detection schemes, and a data processing device, comprising a communication interface and a processor, wherein the communication interface is configured to receive detection signals from the detection devices, and wherein the processor is configured to determine locations of the objects 301, 303 in the maritime environment upon the basis of the received detection signals within a common coordinate system.

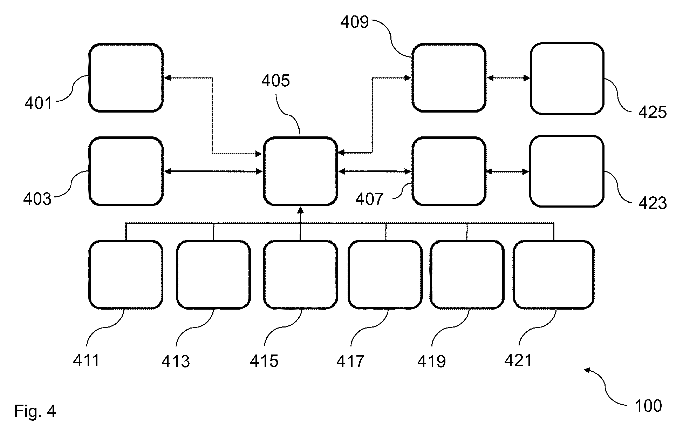

Fig. 4 shows a schematic diagram of subsystems of a system 100 for monitoring a maritime environment according to an implementation form. The system 100 can be used to provide ocean surface layer observations.

The system 100 comprises a sensor unit 401, a sensor unit 403, a data processor unit 405, a display unit 407, a system console unit 409, a radar unit 411, a radar unit 413, a gyro unit 415, a GPS unit 417, an AIS unit 419, and a compass unit 421. The system 100 is operated by a system operator 423 and is configured by a system engineer 425.

The system 100 comprises four subsystems: The sensor units 401, 403 as optical instrumentation that enables observations with high resolution at or under the sea surface, the data processor unit 405 as a data processor that processes data from the sensor units and combines the data with data from existing sensors such as radar, the display unit 407 as an operator display that can present the information from the optical instrument and the data processor in an operator-friendly way, and the system console unit 409 as a computer used to configure the system 100.

The figure gives a schematic overview of the relationship between the subsystems. The subsystems can be connected to ship sensor systems, such as the radar unit 411, the radar unit 413, the gyro unit 415, the GPS unit 417, the AIS unit 419, and the compass unit 421. The data processor unit 405 is connected to the ship sensors as a passive listener. The system console unit 409 and the display unit 407 can use the existing ship communication network to connect to the data processor unit 405.

The number of sensor units, display units, system console units and radar units can vary. The display unit can use an existing display sharing system on the bridge, so the system can be visible from several consoles on the bridge.

In an implementation form, only one sensor unit is used, and the data processor unit uses only a single radar unit.

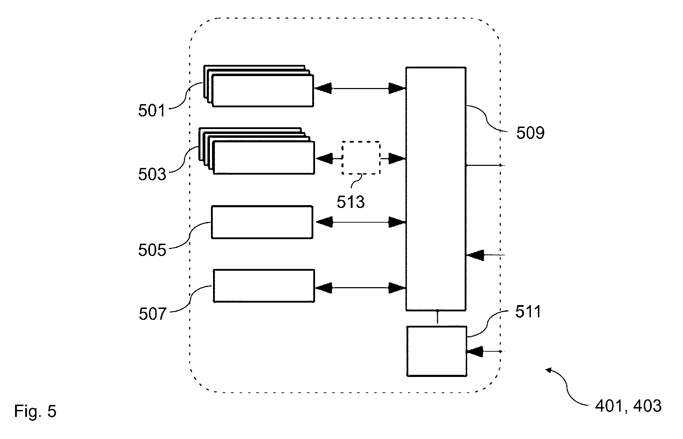

Fig. 5 shows a schematic diagram of a sensor unit 401, 403 of a system for monitoring a maritime environment according to an implementation form.

The sensor unit 401, 403 comprises a laser unit 501, an auxiliary sensor unit 503, a mechanical scan unit 505, a real-time motion reference unit 507, a real-time control unit 509, a power supply unit 511, and an A/D conversion unit 513.

The sensor unit 401, 403 comprises a set of sensors that measure the environment of the ship. The following sensors can e.g. be used: a blue-green laser, and/or an optical camera. This instrument can provide the capability to observe objects at or under the sea surface at a resolution better than radar.

In addition, the sensor unit 401, 403 can have a motion reference unit (MRU) that measures vibrations, attitude and accelerations. The vibration measurements can be used to correct the reported angles at which measurements were taken, and attitude and acceleration are reported to the data processor unit which can use this information to convert sensor unit measurements to a Cartesian Ship-Centered Frame to fuse the sensor unit data with the data from other instruments.

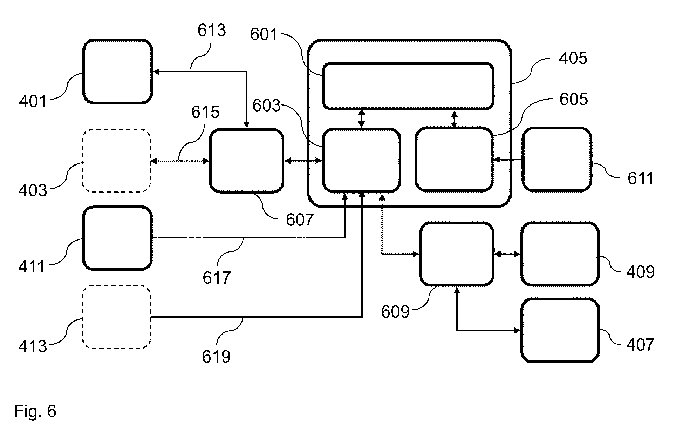

Fig. 6 shows a schematic diagram of a data processor unit 405 of a system for monitoring a maritime environment according to an implementation form. The diagram illustrates the interfaces of the data processor unit 405.

The data processor unit 405 comprises a data processor core unit 601, an Ethernet network card unit 603, and a serial interface unit 605.

The Ethernet network card unit 603 is connected to a Fiber / Ethernet switch unit 607. The Fiber / Ethernet switch unit 607 is connected to a sensor unit 401 via a data, monitoring and control signal line 613. The Fiber / Ethernet switch unit 607 is further connected to a sensor unit 403 via a data, monitoring and control signal line 615.

The Ethernet network card unit 603 is further connected to a radar unit 411 via an observation signal line 617, and to a radar unit 413 via an observation signal line 619.

The Ethernet network card unit 603 is further connected to a bridge switch unit 609. The bridge switch unit 609 is connected to a display unit 407 and a system console unit 409.

The serial interface unit 605 is connected to a ship sensor unit 611.

The data processor unit 405 processes the data of the sensor units 401, 403 and the data of the ship sensors. The data processor unit 405 comprises the following hardware units: a core system where the processing related to the main functionality takes place, an Ethernet switch with ports for fiber optic cables, a radar slave junction box to create a passive connection to the radar and the other ship sensors, a radar digitizer, and a network serial interface to connect to the ship sensors.

The data processor unit 405 can work autonomously, and can be configured and monitored via a system console unit 409. The data processor unit 405 performs the following processing: read measurements by the ladar and visual band camera of each sensor unit 401, 403 and convert these to a point cloud with position relative to the ship, read measurements by the onboard radar units 411, 413, e.g. a top mast X-band radar and convert these to a point cloud with position relative to the ship, convert measurements of sensor units 401, 403 and ship's radar units 411, 413 to the same reference, perform clustering and tracking to distinguish objects from noise, perform additional analysis and characterization, if possible, on detected objects, and report results to the display unit 407 for display to the end user.

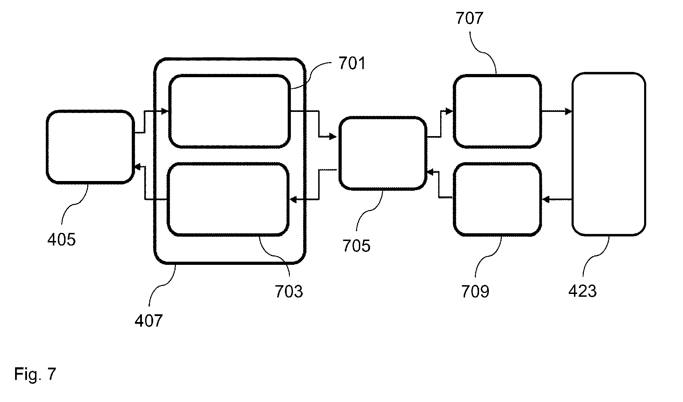

Fig. 7 shows a schematic diagram of a display unit 407 of a system for monitoring a maritime environment according to an implementation form.

The display unit 407 comprises a visualization unit 701, and an interaction unit 703.

The visualization unit 701 and the interaction unit 703 are connected to a data processor unit 405. The visualization unit 701 and the interaction unit 703 are further connected to a keyboard-video-mouse switch unit 705.

The keyboard-video-mouse switch unit 705 is connected to a display unit 707 and a mouse unit 709. The display unit 707 and the mouse unit 709 are operated by a system operator 423.

The display unit 407 can be the interface between the system and the operator, which can be a captain, a first officer, a pilot, a navigation officer, a safety officer, a security officer, a platform operator, a platform manager, or anybody who is interested in the information made available by the system. The bridge or operational room can be equipped with a screen sharing system, which comprises several computers and several displays, connected via the keyboard-video-mouse (KVM) switch 705.

Each of the displays 707 can e.g. select one of four computers to connect with. The display unit 407 can be a computer that is connected to the system so that the output of the system can be viewed on several screens. Additionally, a separate computer, e.g. a laptop, can be used. Integration with an existing bridge system such as a conning station or an ECDIS can be realized.

One or more displays, with optional mouse input, can be connected to the display unit 407 via the keyboard-video-mouse (KVM) switch unit 705.

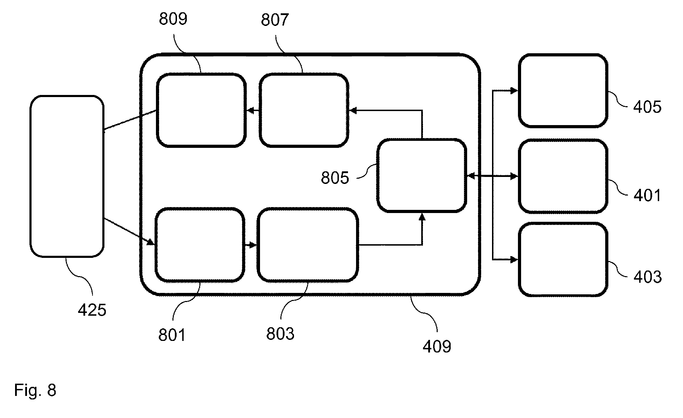

Fig. 8 shows a schematic diagram of a system console unit 409 of a system for monitoring a maritime environment according to an implementation form.

The system console unit 409 comprises a keyboard-mouse-touch unit 801, a command generator unit 803, a network card unit 805, a display control unit 807, and a display unit 809.

The network card unit 805 is connected to a sensor unit 401, a sensor unit 403, and a data processor unit 405. The keyboard-mouse-touch unit 801 and the display unit 809 are operated by a system engineer 425.

The system console unit 409 can be used to control the sensor units 401, 403 and the data processor unit 405. It provides a technical view of the inner functionality of the sensor units 401, 403 and it can be used to change modes and settings of each. This functionality can be integrated with the operator display unit 407.

The system console unit 409 can be used to incidentally configure the system. Once this is done, operating the instrument can happen via the display unit 407. The target user of the system console unit 409 can be an engineer, not a navigation officer or captain.

The system console unit 409 can be used to control both the data processor unit 405 as well as the sensor units 401, 403. The communication to the sensor units 401, 403 can be routed via the data processor unit 405.

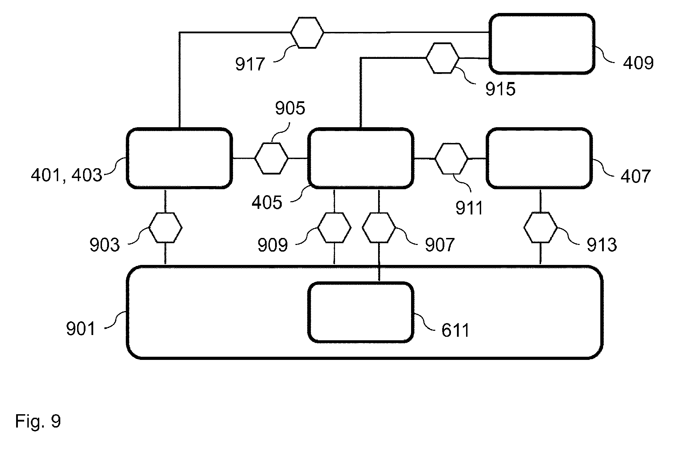

Fig. 9 shows a schematic diagram of interfaces 903, 905, 907, 909, 911, 913, 915, 917 of a system for monitoring a maritime environment according to an implementation form. The diagram comprises a sensor unit 401, 403, a data processor unit 405, a display unit 407, a system console unit 409, a ship sensor unit 611, and a ship structure 901.

The interface 903 connects the sensor unit 401, 403 to the ship structure 901. This interface illustrates the way that the sensor unit 401, 403 is mounted on the ship. The interface 903 comprises electrical power cables, e.g. 230 VAC, 60 Hz, and a network fiber optic cable to the network. The fiber optic cable can be of multimode type, e.g. core/cladding diameter of 62.5/125! m, terminated with connector type SC on the sensor unit 401, 403 end and LC on the data processor unit 405 end.

The interface 905 connects the sensor unit 401, 403 to the data processor unit 405. The sensor units 401, 403 can connect to the data processor unit 405 via a LAN network. The sensor units 401, 403 can provide data via the LAN using a specific protocol for the data and commands. Time synchronization can be done using the Network Time Protocol (NTP). The data rate of the link between sensor unit 401, 403 and the data processor unit 405 can be 1 Gbps. The LAN can be implemented as a fiber-optic network and separated from the existing ship network. The sensor unit 401, 403 provides the following information for each shot: power-delay profiles in CPICF, a pointing direction of the laser at the time of firing, a time of measurement in microseconds since some epoch, and at regular intervals a current best estimate of parameters describing yaw/pitch/roll and surge/sway/heave.

The interface 907 connects the data processor unit 405 to the ship sensor unit 611. Two types of data of radar signals can be available: the navigational messages and the analog video signal. The navigational messages of the radar and other ship sensors, e.g. time information, position, and heading, can be made available by a navigation device using a network serial interface. This device can provide one or more serial lines, e.g. at a maximum data rate of 38.4 kbps each, that contain NMEA-0183 messages. The analog video signal can be provided via a navigation device slave junction box. A scan streamer can read the radar video and data signals, and converts these into digital messages made available to the data processor unit 405 via an Ethernet port. There can e.g. be three radar systems of which the system can receive information: a bow radar, a mast radar, and/or a stern radar. However, only one or none radar can be used. This radar can have adequate properties regarding field of view, resolution, and height. The radar can be a top X-band radar e.g. with 1 cm resolution and 360 ° view.

The interface 909 connects the data processor unit 405 to the ship structure 901. The data processor unit 405 can be a server system. The form factor can vary. The data processor unit 405 can e.g. be a wall-mountable system. Furthermore, an Ethernet switch can be mounted. A fiber optic cable from the sensor unit 401, 403 can be available, e.g. using connector type LC. Furthermore, electrical power, e.g. 24 VDC or 100 to 240 VAC, can be available. Also, a network cable for the network connection on which the display unit 407 and the system console unit 409 are connected, can be available. Also, the signals from the navigation device slave junction box for the radar video signal and the serial lines from the navigation device network serial interface can be available.

The interface 911 connects the data processor unit 405 to the display unit 407. The data processor unit 405 can connect to the operator display unit 407 via a network cable. The protocol between the data processor unit 405 and the display unit 407 can be a specific protocol with open NMEA-0183 or NMEA-2000 sentences. In addition, there can be HTTP traffic for instrument control.

The interface 913 connects the display unit 407 to the ship structure 901. The operator display unit 407 can be a laptop. A network cable can be used to facilitate a connection from the data processor unit 405 to the operator display unit 407.

The interface 915 connects the system console unit 409 to the data processor unit 405. There are different possible realizations for the operator console: the operator console can e.g. be a separate laptop, or the operator console can be a special mode of the operator display unit 407, where a full computer keyboard can be available for the user. The operator console does not need to be in use all the operational time. A surface for the computer keyboard can be available in range of the keyboard connector, or can be available for a laptop with network connection. Therefore, the data processor unit 405 can be reached. The system console unit 409 can be integrated with the display unit 407. The display unit 407 can also comprise a web browser that can be used to perform maintenance tasks and diagnostics.

The interface 917 connects the system console unit 409 to the sensor unit 401, 403. The system console unit 409 or operator console can be used to control the sensor units 401, 403 and the data processor unit 405. This can involve sending commands to the sensor units 401, 403 to change modes or settings and retrieving housekeeping data. The protocol between the system console unit 409 or operator console and the sensor units 401, 403 can be based on a specific protocol. The communication between the system console unit 409 or operator console and the sensor units 401, 403 can be routed via the data processor unit 405, because it can be the data processor unit 405 to which the sensor units 401, 403 are connected, e.g. using a fiber-optic network.

The following coordinate frames can be used: an uncompensated polar instrument-centered frame (UPICF) wherein coordinates are round trip time and uncorrected laser pointing angles, e.g. azimuth and elevation, with respect to the fixed instrument, a compensated polar instrument-centered frame (CPICF) wherein coordinates are range and laser pointing angles, e.g. azimuth and elevation, with respect to the fixed instrument and corrected for vibrations measured by the sensor unit 401, 403, a Cartesian ship-centered frame (CSCF) wherein coordinates are Cartesian with the origin in the center of the ship, and wherein X can be forward, Y can be in starboard direction and Z can be positive downward, an earth-centered inertial frame (ECIF) wherein coordinates are Cartesian with the origin at the center of the earth, and/or a latitude longitude altitude (LLA) frame wherein coordinates are latitude and longitude in fractional degrees, e.g. according to WGS84, and altitude is with respect to the local geoid.

A conversion between coordinate frames can be performed. In order to process the information from the sensor unit 401, 403, which can be provided as a power-delay profile measured in a particular direction with respect to the sensor unit 401, 403, it can be converted to the Cartesian ship-centered frame (CSCF), so that it can be compared with radar measurements which can also be converted to this frame.

The conversion from UPICF to CPICF can take place on the sensor unit 401, 403. The following steps can be involved: convert from mirror angle to angle with respect to the sensor unit 401, 403 wherein instrument geometrical parameters can be input, correct for vibrations wherein measurements from a motion reference unit (MRU) can be input, convert round trip time into range with respect to a reference point in the sensor unit 401, 403 wherein instrument calibration parameters can be input. The sensor unit measurements can be sent to the data processor unit 405 in CPICF.

A conversion from CPICF to CSCF can be performed. The data processor unit 405 can receive sensor unit and radar measurements in CPICF, with the origin at some reference point in each of the instruments. These measurements can first be converted to a common Cartesian ship-centered frame (CSCF) so that the results can be combined. This can be done using the following steps: shift the reference point from the sensor unit / radar center to the ship center wherein instrument locations with respect to the ship center can be input, convert attitude relative to the instrument to attitude with respect to the ship horizontal wherein instrument orientation can be input, convert attitude with respect to the ship to attitude with respect to the local horizon wherein roll, pitch and yaw angles of the ship from an MRU and/or a ship gyro can be input, convert from polar coordinates azimuth, elevation and range to Cartesian coordinates with the ship as origin, e.g. with X is forward, Y is starboard direction, Z is downward, and shift to the average ship center by correcting for heave, surge and sway wherein heave, surge and sway movement of the ship from an MRU and/or ship GPS can be input.

A conversion from CSCF to ECI can be performed. To convert from CSCF to ECI, the ship position obtained from a GPS can be used.

A conversion from ECI to LLA can be performed. Some NMEA sentences can present locations in latitude/longitude/altitude (LLA) coordinates. Using e.g. a WGS84 coordinate system definition, the LLA coordinates can be converted to ECI and the other way around.

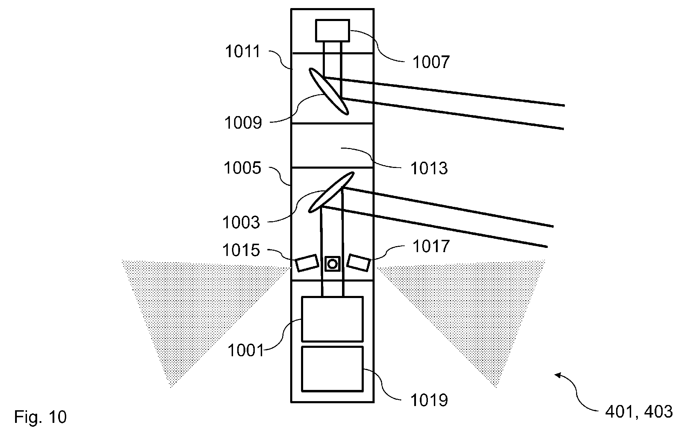

Fig. 10 shows a schematic diagram of sensor components of a sensor unit 401, 403 according to an implementation form.

The sensor unit 401, 403 comprises a ladar unit 1001, a visual mirror 1003, a visual window 1005, an IR / BIL unit 1007, an IR mirror 1009, an IR window 1011, a mirror drive unit 1013, a cam unit 1015, a cam unit 1017, and a control, IMU and power unit 1019.

The sensor unit 401, 403 can comprise the following set of sensors in the sensor pod.

Firstly, a CCD visual band imager can be included in the sensor unit 401, 403.This can be placed in a circular structure to provide omnidirectional visibility from the sensor.

Secondly, a ladar unit can be included in the sensor unit 401, 403. The ladar unit can comprise a laser transmitter and beam shaping optics, receiving optics and multiple detection channels. Separate systems can provide high sensitivity, long range window and matrix detection of the scene. A mirror or prism based precision pointing system can control the beam.

Thirdly, an infrared active and passive imager can be included in the sensor unit 401, 403. This unit can provide high magnification, long range target detection and imaging. The unit can use an active near IR waveform to provide long range all-weather classification and a medium wave IR waveform for long range passive detection. This part of the system can be seen as an adjunct sensor to the ladar.

The unit can also comprise a processing and interface unit that can provide local system control and high throughput local sensor processing. An onboard motion reference unit (IMU) can provide location and attitude data. The motion sensor data can be used to provide correction data or to dynamically stabilize the pointing of the sensor.

The mechanical design of the system can be implemented to provide a robust and nonintrusive design, with the ability to withstand any environmental condition.

The mechanical system and the optical apertures comprise a self-supporting vertical cylinder with two optical apertures, one cylindrical aperture for the visible band, e.g. 400-800nm, and one separate cylindrical aperture for the infrared band, e.g. 1200nm-6000nm. The optical apertures can have the following specifications: the external surface can be water and contamination resistant having an optical quality surface, the internal surface can be non-reflective coated having an optical quality surface, and the mechanical strength can resist environments and bird strikes.

The ladar system can operate in the blue-green part of the spectrum and can provide data for surface and subsurface imaging. Key specifications can be: a wavelength in the region 480nm - 600nm, a solid state laser technology, a pulse energy of 1 - 10mJ per pulse, a pulse length of 3ns nominal, controllable 1ns - 100ns, and a pulse repetition frequency of nominally 10kHz, in the region 5kHz - 50kHz. A first detector can be characterized by a high sensitivity time series recording, a sampling speed of min. 300MHz, and a dynamic range of min. 90dB. A second detector can comprise a very high sensitivity photomultiplier and can provide a single range cell. A third detector can comprise a monochrome high resolution imager. A fourth detector can optionally be hyper-spectral or a line array.

The visual band imager can provide a continuous coverage around the ship. Key specifications can be: a CMOS imager having a resolution of 1920 x 1080 or better, an orthonormal lens providing a horizontal coverage of 109 degrees, and a specific data output.

The infrared imager can be optional. Key specifications can be: a scanning area of 360 degrees azimuth, +20 degrees to -45 degrees elevation, two simultaneous modes with active 1500nm and passive 5000nm infrared, at 1500nm with a sector of observation of 1.5 x 1.5 degrees, at 5000nm with a sector of observation of 15 x 15 degrees, and a specific data output.

The scanning mirror system can provide a capability for continuous scanning and target tracking. Key specifications can be: a mirror dimension to support 15cm beam envelope, scan modes comprising step azimuth with swing vertical, step vertical with swing azimuth, and slew to position, a specific scan velocity, a scan accuracy of e.g. 1 mrad, and IMU reference modes comprising a free scan with IMU tagging, and an IMU slewed scan.

The navigation and inertial reference can measure the movement of the platform in order to compensate for the ship movement. It can cover the following directions: pitch, roll, and heave.

The heading can also be relevant in the system, but the change of heading can be considered to be so slow that the ship compass can be used. Since the sensor update rate is min. 1 Sec., the most critical parameter can be considered to be the dynamic pitch, roll and heave measurement.

Key specifications can be: a heave range of ± 2M, a heave accuracy of ± 0.2M with 1 sec. repeatability, a pitch range of ± 5°, a pitch accuracy of ± 0.025° with 1 sec. repeatability, a pitch angular rate of ± 1 °/sec, a roll range of ± 5°, a roll accuracy of ± 0.025° with 1 sec. repeatability, and a roll angular rate of ± 0.5°/sec.

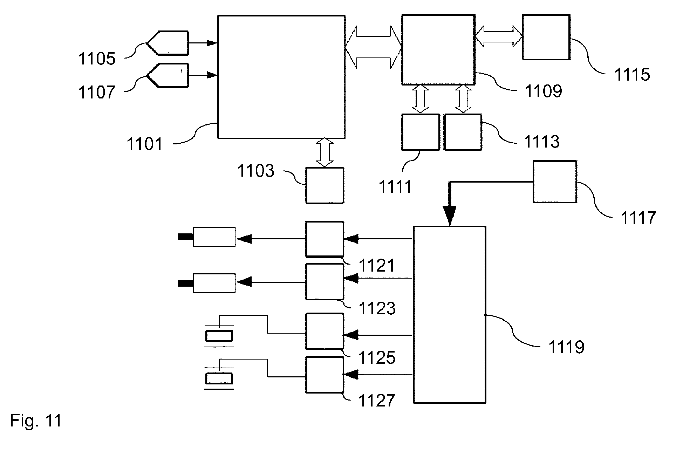

Fig. 11 shows a schematic diagram of processing components of a sensor unit according to an implementation form.

The processing components comprise an FPGA unit 1101, a RAM unit 1103, an A/D conversion unit 1105, an A/D conversion unit 1107, a CPU unit 1109, a RAM unit 1111, a FLASH unit 1113, an Ethernet unit 1115, an IMU unit 1117, a scan controller unit 1119, a step motor drive unit 1121, a step motor drive unit 1123, a piezo drive unit 1125, and a piezo drive unit 1127.

The ladar processing system can handle sensor near processing such as ping averaging, digital filtering, and/or vibration correction. In addition, the processing system can control the scan motion of the mirror system.

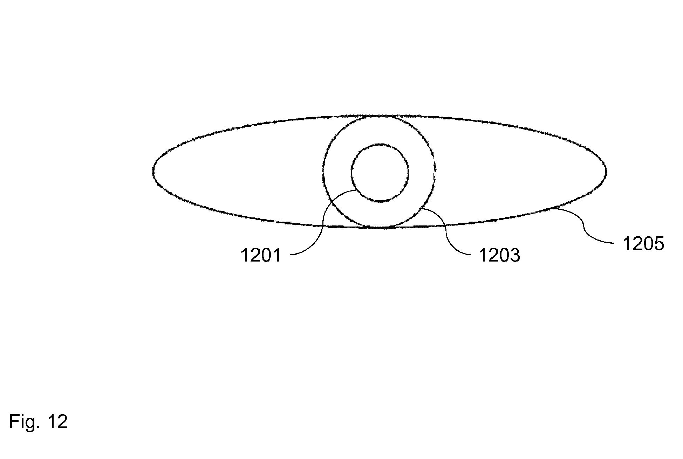

Fig. 12 shows a schematic diagram of a cross-section of a laser beam according to an implementation form.

The diagram comprises a cross-section of an ideal circular laser beam 1201, a cross-section of a divergent circular laser beam 1203 at range, and a cross-section of an asymmetrically divergent oval laser beam 1205 at range.

The laser generation unit can be based on a Q switched Nd:YAG laser emitting 532nm wavelength light. This approximate wavelength is desirable as light in this region of the spectrum, i.e. blue-green in color, can pass through water with little attenuation, allowing an illumination of objects below the water surface. The wavelength of the system can also be altered from 532nm to 488nm. This small shift towards blue light can allow the system to more easily penetrate water. The laser generation unit can also be based on different types of lasers.

The sensor unit optics can provide a balance of system output power, detector performance, and eye safety. The method by which both eye safety and detection performance are obtained is through the use of large beam spreading and light collecting optics, respectively. To increase the amount of light power which can be emitted while remaining eye safe, a collimator can be used to spread the beam and thus lower the energy density and therefore the risk of eye damage.

Similarly, detection performance can be improved by gathering a larger surface area of returned light energy, and focusing this onto the detector surface. Also, a dividing baffle can be employed that can physically isolate transmit and receive optical paths to maximize detector performance. While the use of a coded detection waveform can also reduce a crosstalk hazard, a careful optical path design can be advantageous to the system performance.

While common laser systems can be calibrated by use of a visible light camera in the optical path of the laser, and since the laser in the sensor unit can be capable of low power continuous wave emission, the calibration can be carried out by observing the beam intersect point remotely, allowing an elimination of the weight of a prism and a camera from a mobile portion of the optics assembly.

While it can be possible to increase both the output beam diameter and input detector aperture, both of these parameters can be based on larger optical assemblies, which in turn limit the speed with which the optics may be scanned. The sensor unit can have fixed output optics, or can be designed to scan up to 1000 spatial points per second.

While the use of a collimated beam at this power level with a 50mm divergence can remain below the maximum permissible exposure limits (MPEs), e.g. specified in iec60825-1 ed. 2.0, it can be desirable to also provide a provision for accidental viewing of the beam with aiding optics such as binoculars. To this end, the beam can be imparted with an asymmetric divergence. This can both improve the eye safety of the system while also providing a nearly circular beam footprint when this shape is projected onto the water surface at range.

The sensor unit can e.g. emit 130mJ of energy in a 15ns pulse over a surface area of 3.1 e-5 square meters. The sensor unit can also spread its energy over a much larger surface area as well as a much longer duration. By emitting e.g. 200mW of 50% duty cycle light over 1 ms on a surface area of 2.0e-3 square meters, the system can have a short term energy density, i.e. energy per unit surface area, of 2.8 x 10e8 lower over 15ns, while also imparting 77% of the energy of the sensor unit system over a 1 ms period. Due to a pulse repetition rate (PRF) limit of e.g. 30 Hz, it can be advantageous to employ very high power individual pulses, while a modulated diode of the sensor unit can permit to use many lower power and much less hazardous pulses, while also performing more measurements per second.

The sensor unit can use a time gated ranging concept to detect targets at differing ranges. The sensor unit can also use advanced signal processing to allow a simultaneous measurement of multiple range hypotheses, as well as to allow operation at a lower power level by making multiple less intense illuminations of the same target.

A code modulation and a ranging peak detection scheme can be applied. For this purpose, sampling and triggering components of the system can be used. The triggering process can be performed by a modulator, a laser, a photodiode, and a digitizer combination.

A pseudo-random sequence of +/- 1 can be used to modulate the laser. A high autocorrelation suppression characteristic of the modulating or spreading waveform can be desirable. An improvement in SNR can indicate a high achievable cross-correlation suppression of the system. A noise floor raised by the signal itself can indicate an autocorrelation suppression. A correlation peak can show multiple environmental reflections. An artificially increased level of noise floor can be due to a high SNR signal with finite cross-correlation suppression.

The detection of the laser return waveform can be accomplished by an avalanche photodiode (APD), specially designed to be sensitive to the blue-green laser light used by the transmitting laser, as well as to have a wide bandwidth, e.g. 530 MHz nominal. The wide sensor bandwidth can allow the high bandwidth diode laser to produce a sharp correlation or detection peak, which in turn can allow for a precision of up to 30cm in the determination of range to target.

To augment the situational awareness provided by the sensor unit, the system can be fitted with multiple visible band cameras. These can serve the dual purpose of providing a potential for a human readable overlay to detected objects, as well as potentially augmenting detection of threats during daylight conditions. An infrared system, such as a burst illumination system, can further be employed for surface target detection.

The laser beam can be modulated using a general spread spectrum modulation for laser range finding. The modulation can be characterized by the following general characteristics. The laser beam modulation can be based on an advanced time coded modulation scheme for optimum range resolution and target detection clutter suppression. The modulation scheme can achieve a maximum range performance by having a very high duty cycle and a very high processing gain. The modulation scheme can be structured to give a maximum suppression of external disturbance, e.g. light disturbance. The modulation can also be structured to cancel any close up effects.

The laser beam can be implemented as follows. The laser beam can be stabilized to operate with a very narrow bandwidth. The laser beam can be modulated with a very high rate, e.g. 25MHz up to more than 200MHz. The modulation can be an on off modulation, optionally an amplitude shift modulation can be used for enhanced mean power. A minimum side-lobe spreading code can be used. The spreading code can be long enough to provide a unique code for the total range swath, e.g. more than 10000 chips. The spreading code can be superimposed a low rate, e.g. typically 10kHz, square wave modulation wherein a duty cycle can be less than 50%, e.g. typically 40%. This modulation can be matched filtered in the receiver with a resulting range sensitivity curve adjusted to provide a desired range sensitivity profile.

Additionally, the following features can be used. A highly concentrated laser beam to give positive SNR ratio to allow for efficient integration can be utilized. A very high precision stabilization can be utilized to allow for dual mode ranging through range and elevation measurement. Very asymmetrical laser beams can be utilized for optimum target detection at a slant angle. Specific angle and/or scan patterns for target detection, e.g. a carpet mode, a range only mode, a sector mode, etc. can be used.

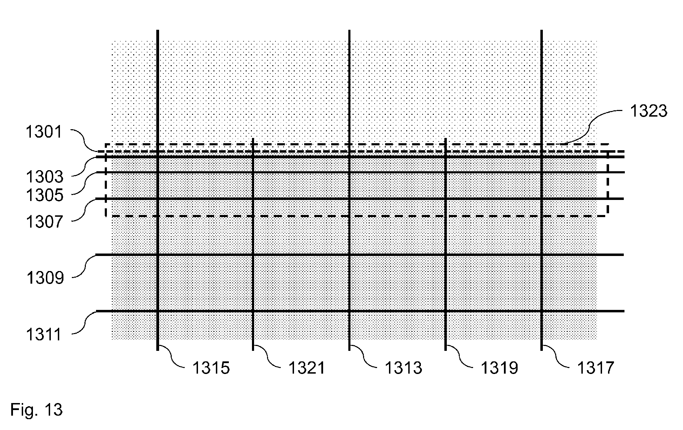

Fig. 13 shows a schematic diagram of a radar coverage area 1323 of a sensor unit according to an implementation form.

The diagram further comprises a horizon line 1301, an elevation line 1303, an elevation line 1305, an elevation line 1307, an elevation line 1309, an elevation line 1311, a front direction line 1313, an aft direction line 1315, a further aft direction line 1317, a starboard direction line 1319, and a port direction line 1321.

The elevation line 1303 can relate to an elevation of -0.9 degrees and/or a range of 2km. The elevation line 1305 can relate to an elevation of -1.7 degrees and/or a range of 1 km. The elevation line 1307 can relate to an elevation of -3.4 degrees and/or a range of 500m. The elevation line 1309 can relate to an elevation of -16 degrees and/or a range of 100m. The elevation line 1311 can relate to an elevation of -45 degrees and/or a range of 30m.

The front direction line 1313, the aft direction line 1315, the further aft direction line 1317, the starboard direction line 1319, and the port direction line 1321 can indicate an azimuth.

The interface to the onboard navigation radar or radars can provide a general situation awareness and detection of surface targets. The navigation radar can be able to detect targets in a 360 degrees sector, and with a range coverage from about 300m to a limit depending on the radar height, target size and environmental condition, e.g. to a 20-30km range.

An extractor can be part of a central data fusion system, and data from this extractor can be used to provide a data general situation awareness picture, and to cue the sensor unit for target confirmation and specific target investigation.

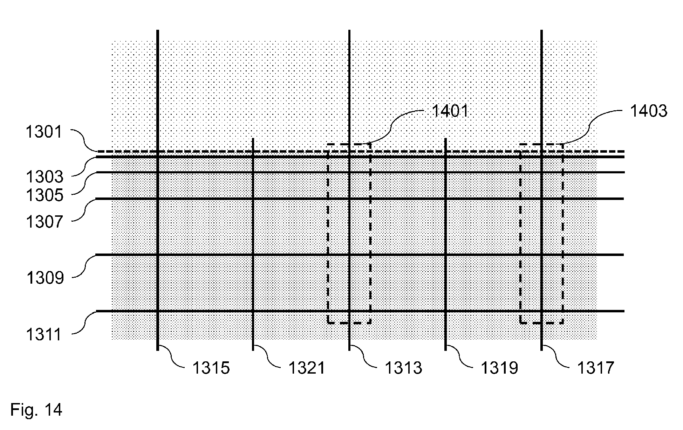

Fig. 14 shows a schematic diagram of a ladar coverage area 1401, 1403 of a sensor unit according to an implementation form. The ladar coverage area 1401 can relate to the front. The ladar coverage area 1403 can relate to the aft. Optionally, further ladar coverage areas for sideway directions, e.g. starboard and/or port, can be included.

The diagram further comprises a horizon line 1301, an elevation line 1303, an elevation line 1305, an elevation line 1307, an elevation line 1309, an elevation line 1311, a front direction line 1313, an aft direction line 1315, a further aft direction line 1317, a starboard direction line 1319, and a port direction line 1321.

The elevation line 1303 can relate to an elevation of -0.9 degrees and/or a range of 2km. The elevation line 1305 can relate to an elevation of -1.7 degrees and/or a range of 1 km. The elevation line 1307 can relate to an elevation of -3.4 degrees and/or a range of 500m. The elevation line 1309 can relate to an elevation of -16 degrees and/or a range of 100m. The elevation line 1311 can relate to an elevation of -45 degrees and/or a range of 30m.

The front direction line 1313, the aft direction line 1315, the further aft direction line 1317, the starboard direction line 1319, and the port direction line 1321 can indicate an azimuth.

The ladar system can have the capability to scan a predetermined sector or predetermined sectors for detecting surface and/or subsurface targets. During normal forward moving operation of the ship or vessel, a forward looking mode can be utilized to scan for targets in the forward path of the ship.

The forward looking mode can scan within a narrow sector, e.g. 20 degrees, from a short range looking down in front of the ship to a maximum range determined by the environmental conditions and settings of the operator. Under optimal conditions and when looking for very shallow targets, a forward looking range of up to 2km can be used.

When two sensor units are used on the ship, a separate front and aft looking sector may be employed or activated.

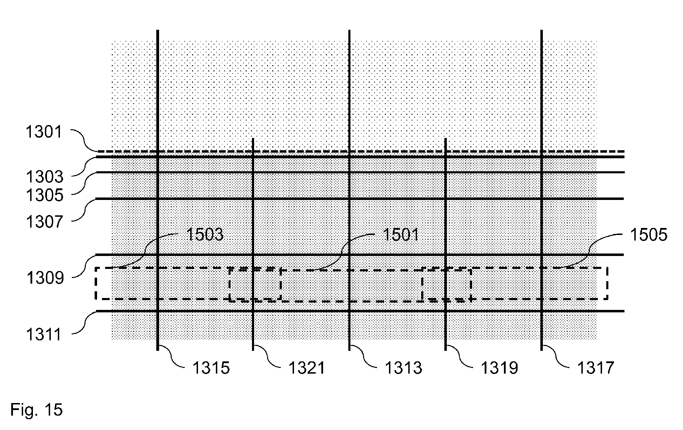

Fig. 15 shows a schematic diagram of a ladar coverage area 1501, 1503, 1505 of a sensor unit according to an implementation form. The ladar coverage area 1501, the ladar coverage area 1503, and the ladar coverage area 1505 can realize an omnidirectional coverage around a ship.

The diagram further comprises a horizon line 1301, an elevation line 1303, an elevation line 1305, an elevation line 1307, an elevation line 1309, an elevation line 1311, a front direction line 1313, an aft direction line 1315, a further aft direction line 1317, a starboard direction line 1319, and a port direction line 1321.

The elevation line 1303 can relate to an elevation of -0.9 degrees and/or a range of 2km. The elevation line 1305 can relate to an elevation of -1.7 degrees and/or a range of 1 km. The elevation line 1307 can relate to an elevation of -3.4 degrees and/or a range of 500m. The elevation line 1309 can relate to an elevation of -16 degrees and/or a range of 100m. The elevation line 1311 can relate to an elevation of -45 degrees and/or a range of 30m. The front direction line 1313, the aft direction line 1315, the further aft direction line 1317, the starboard direction line 1319, and the port direction line 1321 can indicate an azimuth.

In port or when having emphasis on ship security, a round-scanning mode of the system can be activated. This can scan the active laser beam in a perimeter mode around the vessel. The range at which this scan can be performed can be determined by a target depth detection setting. For deepest laser penetration, the perimeter can be set as close to the vessel as possible. This can also be determined by an installation location.

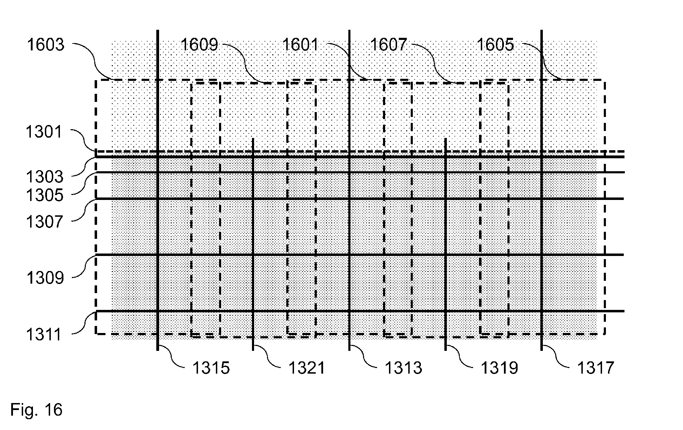

Fig. 16 shows a schematic diagram of a visual band coverage area 1601, 1603, 1605, 1607, 1609 of a sensor unit according to an implementation form. The visual band coverage area 1601, the visual band coverage area 1603, the visual band coverage area 1605, the visual band coverage area 1607, and the visual band coverage area 1609 can be realized by sector cameras.

The diagram further comprises a horizon line 1301, an elevation line 1303, an elevation line 1305, an elevation line 1307, an elevation line 1309, an elevation line 1311, a front direction line 1313, an aft direction line 1315, a further aft direction line 1317, a starboard direction line 1319, and a port direction line 1321.

The elevation line 1303 can relate to an elevation of -0.9 degrees and/or a range of 2km. The elevation line 1305 can relate to an elevation of -1.7 degrees and/or a range of 1 km. The elevation line 1307 can relate to an elevation of -3.4 degrees and/or a range of 500m. The elevation line 1309 can relate to an elevation of -16 degrees and/or a range of 100m. The elevation line 1311 can relate to an elevation of -45 degrees and/or a range of 30m.

The front direction line 1313, the aft direction line 1315, the further aft direction line 1317, the starboard direction line 1319, and the port direction line 1321 can indicate an azimuth.

A complete omnidirectional visual depiction of the ship's or vessel's surroundings can be provided from a set of sector antennas. A stack of e.g. 4 cameras with distortion free optics can be used. They can provide a continuous coverage from short range determined by visibility from the installation locations to the horizon and also including a view above the horizon for reference.

The cameras can provide very low light visibility, and can also have enhanced near-infrared sensitivity to image targets in near no-light situations.

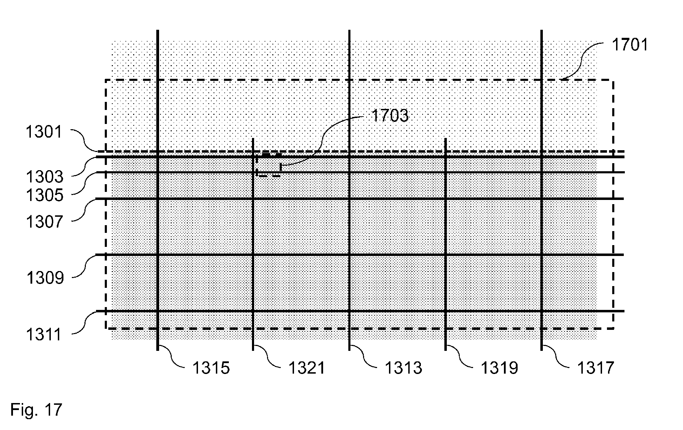

Fig. 17 shows a schematic diagram of an infrared coverage area 1701, 1703 of a sensor unit according to an implementation form. The infrared coverage area 1701 and the infrared coverage area 1703 can illustrate a scan area and/or an engagement element.

The diagram further comprises a horizon line 1301, an elevation line 1303, an elevation line 1305, an elevation line 1307, an elevation line 1309, an elevation line 1311, a front direction line 1313, an aft direction line 1315, a further aft direction line 1317, a starboard direction line 1319, and a port direction line 1321.

The elevation line 1303 can relate to an elevation of -0.9 degrees and/or a range of 2km. The elevation line 1305 can relate to an elevation of -1.7 degrees and/or a range of 1 km. The elevation line 1307 can relate to an elevation of -3.4 degrees and/or a range of 500m. The elevation line 1309 can relate to an elevation of -16 degrees and/or a range of 100m. The elevation line 1311 can relate to an elevation of -45 degrees and/or a range of 30m.

The front direction line 1313, the aft direction line 1315, the further aft direction line 1317, the starboard direction line 1319, and the port direction line 1321 can indicate an azimuth.

A combined active/passive infrared imager can have a large magnification imaging sector that can be scanned and positioned over a total azimuth and elevation scan area. This sensor can be employed or activated based on requests from an operator or automatically from the system to confirm detection from other sensors.

This sensor can also be able to provide very long range, e.g. larger than 2km, up to 15km, classification of targets by providing detailed images and live video for manual inspection or automatic classification. The sensor can also provide a capability to detect submerged targets.

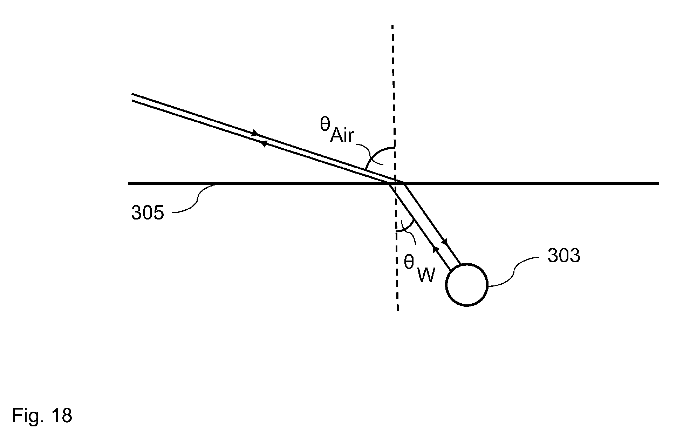

Fig. 18 shows a schematic diagram of a laser beam refraction for detecting an object 303 under a water surface 305 by a laser detection and ranging device according to an implementation form. The transmitted laser beam and the reflected laser beam can be refracted on the water surface 305.

At oblique angles, the laser beam can enter the water with a steeper angle than the incidence angle according to Snell's law of refraction.

It can be shown that n_{w} • sin(! w) = n_{Air}• sin(! _{Air}). Assuming nw = 1.33, n_{Air} = 1.008, and a grazing incidence angle ! _{Air} = 90°, a critical angle !_{Critical} = ! w = 49.3° can be obtained.

This can mean that even at long ranges when viewed from a marine seagoing vessel or ship, a look down into the water is possible. The range can e.g. be up to 3km.

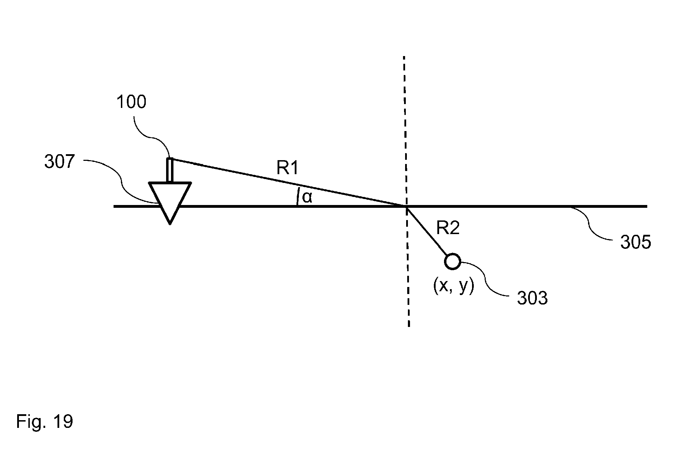

Fig. 19 shows a schematic diagram of an object detection scheme for detecting an object 303 under a water surface 305 by a laser detection and ranging device according to an implementation form.

The diagram further comprises the system 100 with the laser detection and ranging device mounted on a marine seagoing vessel 307. The transmitted laser beam and the reflected laser beam are refracted on the water surface 305.

The object position is denoted as (x, y). The distance from the laser detection and ranging device to the water surface 305 is denoted as R1. The distance from the water surface 305 to the object 303 is denoted as R2. The angle ! is measured between the water surface 305 and the laser beam.

By measuring R = R1 + R2 and ! , absolute values for x and y can be obtained.

The following sea corollaries can be considered. Firstly, reflection and refraction amplitude can be polarization dependent. The VV, i.e. vertical-vertical, polarization can be desirable. Secondly, for a rough sea surface, the surface may not be flat with angles from horizontal up to 10 degrees. The sea surface can comprise gravity waves and/or capillary waves.

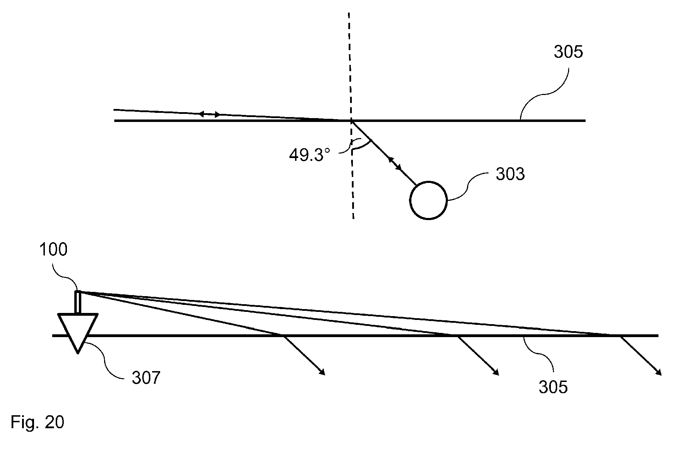

Fig. 20 shows a schematic diagram of an object detection scheme for detecting an object 303 under a water surface 305 by a laser detection and ranging device according to an implementation form.

The diagram further comprises the system 100 with the laser detection and ranging device mounted on a marine seagoing vessel 307. The transmitted laser beam and the reflected laser beam are refracted on the water surface 305.

The laser beam can follow a path from the laser detection and ranging device to the object 303 and the same path back.

The reflection calculations can be based on the following. The sensor can be mounted 30 meters above sea level. The distance to the object or target can be 1 km. The laser beam angle of incidence to the water surface 305 at the object 303 or target can be arctan(30/1000) = 1.7degree.

The reflection from the air/water interface and the transmission into water can be calculated by the expressions for Fresnel reflections. At a very low angle of incidence to the air/water interface, the reflection can be very high and the transmission into water can be very low.

The transmission into water can amount to 21.5% for the vertical polarization and 12.5% for the horizontal. Thus, if a maximization of the coupling of laser light into the water is desired, the laser can be vertically polarized. Then, 21.5% of the laser light can go into the water.

This light can hit an underwater part of the object 303 or target and can be reflected back. This reflected laser light can once more have to travel through the air/water interface. If it is assumed that the target is a perfect Lambertian reflector, the reflected laser light can be un-polarized. That means that it can be 50%-50% vertically and horizontally polarized.

The reflection loss, and thereby the transmission from water into the air can then be the average of the vertical and horizontal polarization. That is T=17%. The total transmission into and out of the water can then be 21.5% x 17% = 3.6%, e.g. for vertical polarized input laser light, similarly for horizontal input laser light 12.5% x 17% = 2.1 %. The reflection coefficient of the target can further reduce this.

It can be assumed that the object 303 or target can have the same surface color above and below the water line. Therefore the reflection coefficient from the above water and from the below water can be the same. The below water fraction of the beam can be very much reduced because it can have to travel through the air/water interface twice.

An additional point can be the transmission losses in water. If it is assumed that the laser beam has 1 meter in diameter, the lower part of the beam can have to travel 25meters through water before hitting the object 303 or target, and then 25meters back before hitting the water/air interface again. Values for the attenuation of laser light in water can e.g. be between 0,0001 and 0,01 cm^-1. If 0.001 cm^-1 is assumed, the transmission can become 0.7% through 50meters. This illustrates that the upper part of the laser beam can be a major contributor to the reflection from the object 303 or target.

A further point can be that when 21.5% of the laser beam is coupled into the water, 78.5% can be reflected from the air/water interface. A part of this laser light can hit the above water part of the object 303 or target and can be reflected back towards the sensor. This can increase the contribution to the signal from the above water part of the object 303.

In these calculations, no waves are assumed. This can be an idealized situation. The energy propagating down below the water surface can be higher or lower depending on the shape and/or slope of the water or ocean waves. Furthermore, ship masts can have different height, e.g. up to 70 meters. However, it can illustrate the point that the reflection from the above water part of the object 303 or target can be stronger than the reflections from the underwater part.

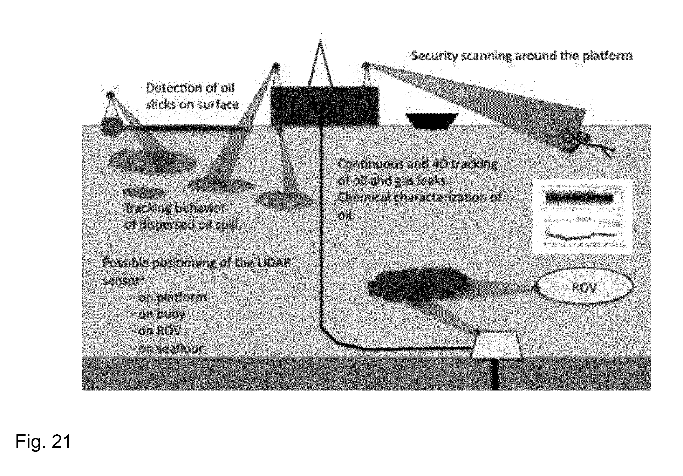

Fig. 21 shows a schematic diagram of possible locations of detection devices of a system for monitoring a maritime environment according to an implementation form.

Possible deployment locations or positions of the detection devices, e.g. a laser detection and ranging (ladar) device or a light detection and ranging (lidar) device, can be in air from a platform, on the water surface from a buoy, in the water column from a remote operational vehicle (ROV) or raisers, and/or on the sea floor from a well or a pipeline.

A laser detection and ranging (ladar) based or light detection and ranging (lidar) based concept can provide unique capabilities that can provide the capability to detect and assess oil spills over a whole pipeline range from a well to a platform. A laser beam or laser light can be used to track the dispersion of oil in water. A ladar or lidar device or system with a blue-light laser beam can be used to detect small objects in, on and below the water surface or sea surface.

The combination of both concepts can lead to a sensor system that can be able to detect, track and characterize oil and gas (O&G) in sea water, where the sensor itself can be deployed both within the ocean and/or on a rig/vessel to monitor the oil or gas from the air into the water.

The benefits of a ladar or lidar can include a high detection capability even for small leakage rates paired with a low False Alarm Rate (FAR), a high spatial resolution, i.e. millimeters at ranges to 50 m depending on turbidity and suspended matter, a 4D imaging capability, i.e. 3D plus/over time, and the ability to determine the chemical structure of the oil.

Furthermore, the system or device can use only low power, e.g. in the order of 1W, so that it can operate for a year or more on simple battery power, which can be relevant for underwater installations. It can also be compatible to EX certification for platform installation. The ability to detect small leakages has great advantages as it can enable an operator to have a much better awareness of the deep sea bottom and water column concerning whether there is a spill or if a spill is just occasional or if the spill is in succession which can represent a possible precursor for an eventual serious breach in well and/or transport integrity.

The sensor system can be realized by components, wherein the combination of these components and selection of design parameters, such as wavelength, modulation, and/or transmit/receive (TX/RX) architecture, can create a unique functionality.

The sensor system can comprise a solid-state laser with high-speed amplitude modulation and correlation, and a micro-mechanical scanning device. By selecting the wavelength of the laser beam or light, the sensor laser beam or light can penetrate both water and air, and from water to air and vice versa. The system or sensor can be optimized to operate as an Oil Spill Detection (OSD) system. It can be used as a stand-alone system or sensor or complement existing OSD solutions by adding much improved resolution and 4D-tracking. Its water penetrating capabilities can add 4D-tracking capabilities to follow the dispersion of any oil or gas spillage.

The system or sensor can provide a continuous remote sensing solution for oil operators that can alert the operator of any spillage. The system or sensor can enable the operators to decide whether an oil spillage exceeds a limit of for example 1m³/1000 liter. Furthermore, the system or sensor can be equipped with multi-spectral detectors allowing a chemical characterization of the oil. This can support the operators to determine the type of oil that has been spilled. Also, the system or sensor can be used to support the cleaning process as the oil type characterization can affect a choice of a cleaning approach, i.e. it can identify a thickness and a type of oil spatially. A 3D or 4D tracking can provide a continuous feedback about the efficiency of a cleaning process, including the dispersant effectiveness.

The system or sensor can be used as a prime assessment device for the integrity of a well and/or pipeline, in principle from well to platform, by knowing where and when there is a leakage/spill, the type of spill, and volume of spill. It can allow to quickly assess the quantity of a spill with very low FAR.

If operators continuously monitor, e.g. to comply with a 1 m³ release limit, they primarily rely on surveillance by a satellite, e.g. an SAR satellite. This can be expensive, provide a limited spatial/temporal resolution, and provide only a limited coverage as revisit times of satellites are usually at most once every N hours, and weather conditions, especially wind speed, further influences satellite imagery. The system or sensor system can allow a true continuous and in-situ monitoring system with high accuracy and resolution with an all-weather capability.

The system or sensor system can combine sensor data with other information sources, e.g. of a plurality of detection devices, sensors and/or sensor platforms by means of data fusion, and can monitor the integrity of the detection or sensor data and other data fused detectors or sensors, i.e. by system health monitoring. The operators can be aware of the actual O&G releases, and can study and act on impacts.

The system or sensor can be a ladar or lidar based system comprising a laser beam or light with a wavelength optimized for water penetration, an amplitude modulator on the laser beam or light adding a Pseudo Random Noise (PRN) to the transmitted laser beam or light signal, a receiver system with a matched filter to recognize the laser beam or light signal from the noise, and a multi-spectral detector to characterize the chemical structure of the parts that reflect the laser beam or light signal.

Ladar or lidar based systems or technologies for maritime applications can focus on the following areas: military use including submarine, floating/submerged mine, and/or diver/swimmer detection, bathymetry for mapping of the ocean bottom/sea floor from vessels and aircrafts, biological characterization regarding fish inventory and environmental mapping from vessels, object detection from vessels, search-and-rescue applications, detection of markers, drifters, metocean conditions, such as waves, currents, winds, fronts, eddies, internal waves, reefs, ice floes, sea ice, growlers, mammals, pirates, floating containers, and/or drifting objects.

According to an implementation form, the invention relates to a system for surface layer object and depth detection for a vehicle or installation. A system for a vehicle, vessel or platform can be provided for allowing a user of the vehicle, vessel or installation to obtain advanced and up-to-date information about depths, objects or targets in a water column or on a surface surrounding the vehicle, vessel or installation itself. The system can be located on a marine sea going or stand-still vessel and it can integrate information from a surface layer sensor capable of observing the surface layer of the oceans. The surface layer observation sensor can include information from other sensors, such as advanced radar and sonar subsystems on a ship, information from conventional instruments and sensors and information from onshore and offshore installations and other earth observation sources. A data processing apparatus for processing and presenting the data can be provided. The data can be received, processed and presented in 3D in space and updated in real time such that time can provide a fourth dimension to the data. A graphical user interface for presenting the data can be provided. The graphical user interface can provide functionality for reporting an error in the system if the end user's own observations do not match the presented data.

According to an implementation form, the invention relates to a use of a system for a vessel, vehicle or an installation. More particularly, but not exclusively, it can relate to a navigation, safety and security apparatus for a marine sea-going or stand-still vessel, oil/gas production platform or harbor, which can integrate information from a surface layer observing sensor and a number of different information sources, and can present the information to a user using a graphical user interface. More specifically it can relate to a detection, characterization, and tracking of objects or targets in the surface layer and to a measurement of ocean depth in the water column surrounding a vessel, vehicle or installation.

Instruments of different technological complexities can be used to navigate at sea. Navigational tools can comprise nautical charts in paper form, compasses and speed meters on a ship, while more complex tools can include chart plotters linked to GPS receivers and interfaces for connecting to sat-coms and/or for connecting to the Internet to obtain up-to-date metrological data.

A separate user interface can be provided for each navigation device. For example, on a ship, there can be provided one display showing the depth from the hull to the seabed, another display showing the speed of the vessel relative to the ocean current and a third display interfacing to a radar unit. An integration of the different devices can be achieved. For example, a National Marine Electronics Association (NMEA) interface can be employed, which can communicate with a number of different sensors. If the data is presented together, it can typically only be combined on a display and the data from the different sensors can typically not be processed together.

The user-friendliness of these interfaces and the detail of the information provided to the user can be improved. For example, a user interface to radar sensors can display a large cluster point on a screen to represent a large backscattered return from a large object in the vicinity of the ship and a small cluster point on a screen to represent a smaller backscattered return from a smaller object. The point can convey the object's distance relative to the radar sensor. As the radar turns 360 degrees, a full representation of all visible objects can be mapped on the screen and by repeated turns their speed. However, a possibility of investigating the object further is desired, such as investigating whether the object is a buoy or a swimmer. Such smaller objects may not be captured by sensors such as radars since such objects can be hidden in the surface layer.

Sonar technology can be used to show the depth in one dimension, i.e. the distance to the seabed directly below a single transducer on a ship. Consequently, it may not signal forward hazards such as rocks to the user. Forward-looking sonar heads can be employed but they may not provide depth data coherently with range and bearing information. The speed of sound in water may not facilitate a detection range suitable for vessel or vehicle at typical operational speeds.

Video and infrared cameras can be used for security purposes e.g. to protect against potential intruders approaching a vessel, vehicle or platform. Various objects can approach the vessel, vehicle or platform e.g. without being detected by these systems, particularly in fog, during the night or when the objects approach just below the surface of the water.

Conventional sensors and instrumentation on marine vessels and platforms may not be capable of detecting, tracking and providing details about events such as goods and people falling overboard, particularly in the surface layer of the oceans. They may neither be able to observe the ocean depth surrounding a vessel, vehicle or platform.

According to an implementation form, there is provided a system for a vessel, vehicle or installation comprising a first subsystem for obtaining information about surface layer objects or targets or shallow water depth in a first, a second or multiple regions around said vessel, vehicle or installation, means for receiving information via a communication link from an information source internal or external to said vessel, vehicle or installation, means for combining and processing information received from the subsystem and from one or several information sources, and means for presenting the combined and processed information to a user of said vessel, vehicle or platform.

The means for combining and processing can be configured to extract information that may inherently not directly available to display, it can generate a scene in three dimensions (3D) in space including information from the first, the second or multiple regions. The means for combining and processing can further be configured to update the 3D scene with time. The subsystems can be configured to obtain data sets in three dimensions in space. The means for presenting can be configured to present the information in three dimensions in space.

Consequently, the system can provide a system for obtaining, processing and presenting 3D data sets. It can also allow the data to be updated with time and therefore provide a fourth dimension.

The subsystem can comprise at least one laser sensor and the internal and/or external system can comprise at least one radar sensor. The subsystem can comprise a payload including a ladar, e.g. a laser detecting and ranging, or a light detection and ranging (lidar) sensor, or a combination of a ladar and/or lidar and/or a thermal and/or an infrared and/or an advanced camera sensor.

The information received via the communication link can comprise marine meteorological and oceanographic (metocean) data including sea state and sea ice state information. The information obtained in the subsystem can comprise at least one out of positional information, shape information, size information and behavioral information of objects in the first and second or multiple regions. Behavioral information can include information about the speed, the heading and the change in the speed and the heading of an object.

The system can further comprise a system for obtaining additional information about the vessel, vehicle or platform and its surroundings. The additional information can e.g. be information transferred over a National Marine Electronics Association (NMEA) interface e.g. from a GPS device.

According to an implementation form, there can also be provided a data processing apparatus comprising: means for receiving information from an ocean surface layer subsystem and a radar system, means for processing said received information, means for combining or fuse the processed information, means for interpreting said combined information, and means for presenting the processed, combined or fused and interpreted information to a user.

The means for receiving can be configured to receive data sets in 3D in space, the means for processing, combining or fusing and interpreting can be configured to process, combine or fuse and interpret data sets in 3D in space and the means for presenting the information can be configured to present the information in 3D in space. The means for receiving, the means for processing, the means for combining or fusing, the means for interpreting and the means for presenting can further be configured to receive, process, combine or fuse, interpret and present real-time data sets or near real-time data sets.

The information received from said radar or sonar systems can comprise information about at least one out of static and moving objects in the vicinity of a vessel, vehicle or platform. The information can further comprise information about hazardous marine meteorological and oceanographic (metocean) conditions in the vicinity of the vessel, vehicle or platform.

The data processing apparatus can further comprise means for recording an error when the presented information is incorrect.

According to an implementation form, there is also provided a method comprising receiving information from one or several ocean surface layer subsystems, receiving information from one or several radar or sonar systems, processing the received information separately or in combination, combining or fusing the information, interpreting the information and presenting the information to a user. Additionally, there can be provided a computer program for performing the method.

Further, there can be provided a device operable to receive information from a plurality of information sources and configured to provide a graphical user interface (GUI) for viewing information about the surroundings of a vessel, vehicle or platform from the plurality of information sources, the graphical user interface comprising a major view allowing a user to see a view of a 3D scene of the vehicle and its environment, a minor view showing a slice of said 3D scene. The 3D scene can comprise a plurality of sections and each section can comprise data from a different information source of the plurality of data sources and the GUI can be configured to update the data in each section independently of the other sections. The view of said 3D scene can be adjusted responsive to user input in order to show the 3D scene from any direction.

The representations can be symbols representing the objects or true images of the objects. The device can comprise means for deciding whether to show a symbol or a true image of said objects and the means for deciding can be responsive to user instructions or predetermined settings. The true images can be bitmaps.

The device can further comprise means for defining an alarm zone, the alarm zone covering a predetermined region of said 3D scene, and means for analyzing the information from the information sources to detect any objects located in the alarm zone.

According to an implementation form, there can also be provided a computer program for a data processing device operable to receive information from a plurality of information sources, the computer program comprising computer executable instructions that when executed by the data processing device cause the data processing device to provide a graphical user interface for viewing information about the surroundings of a vessel, vehicle or platform from the plurality of information sources.

The information sources can be connected to a main processing device on the vessel, vehicle or platform. A location and an arrangement of the components of an ocean surface layer subsystem on the vessel, vehicle or platform can be defined. A process of obtaining, analyzing and presenting information to a user can be provided. A process of obtaining and pre-processing information from a radar and/or a sonar and/or any other camera type of systems can be provided. A process of obtaining and pre-processing information from a radar and/or a sonar and/or camera systems can be provided. A process of creating and processing a 3D scene of the surroundings of the vessel, vehicle or platform can be provided. External alarm zones and anti-intruder protection can be retrieved by a main processing device. The information sources can be connected to a main processing device on the vessel, vehicle or platform.

According to an implementation form, the invention relates to a system structure, an ocean surface layer subsystem, a radar and sonar and camera system, a processing apparatus, an observation quality, an operation, a graphical user interface, an alarm and anti-intruder protection, a decision support for an operator, and/or applications of use.

According to an implementation form, the invention relates to a surface layer detection, e.g. 5 to -15 m, a characterization and a tracking of objects/targets at a distance from a vessel or offshore platform. This can comprise any object or target in the water column as well as the depth of the water column surrounding a vessel, vehicle, platform or port in the maritime domain.

According to an implementation form, the invention relates to a detection, a characterization and a tracking of surface layer objects or targets in vicinity of a vessel or vehicle while cruising or steaming.

According to an implementation form, the invention relates to a detection, a characterization, and a tracking of sub-surface or surface objects or targets approaching a vessel, vehicle or platform while stand-still.

According to an implementation form, the invention relates to measuring a depth to the sea floor or a submerged object in the vicinity of a vessel, vehicle or platform while stand-still, cruising or steaming.

According to an implementation form, the invention relates to a system for a vessel, vehicle or installation comprising a first ocean surface layer observing subsystem for obtaining information about surface or sub-surface objects or targets or a debt or depth of a column of water in a first region, a second region or multiple regions around said vehicle or installation, a second radar system for obtaining information about surface objects in a second region around said vehicle or installation, and/or a third sonar system for obtaining information about submerged objects in a third region around said vehicle or installation, and/or a forth infrared, thermal and/or camera system for obtaining information about surface objects in a forth region around said vehicle or installation, means for receiving information via a communication link from an information source internal and/or external to said vehicle or installation, means for combining and processing information received from the first subsystem, the second system and or third system, the information source and the means for receiving information, and means for presenting the combined and processed information to a user of said vessel, vehicle or installation.

According to an implementation form, the invention relates to a system wherein the means for combining and processing are configured to generate a graphical scene in three dimensions (3D) in space including information from the subsystem, the first and/or the second and/or third and for multiple said regions.

According to an implementation form, the invention relates to a system wherein the means for combining and processing are further configured to update the 3D scene with time.

According to an implementation form, the invention relates to a system wherein the subsystem is configured to obtain data sets in three dimensions in space.

According to an implementation form, the invention relates to a system wherein the means for presenting are configured to present the combined and processed information in three dimensions in space.

According to an implementation form, the invention relates to a system wherein the vessel, vehicle or installation is a marine stand-still or seagoing vessel, an oil/gas production/storage platform, an installation or a port/harbor.

According to an implementation form, the invention relates to a system wherein the subsystem comprises at least one laser sensor and/or one ladar (laser detection and ranging) and/or one lidar (light detection and ranging) sensor.

According to an implementation form, the invention relates to a system wherein the subsystem further comprises at least one out of a thermal sensor, a laser, an infrared sensor and a hyper-/multi-spectral sensor.

According to an implementation form, the invention relates to a system wherein the information received from the information source internal or external to said vehicle or installation comprises object or target information.

According to an implementation form, the invention relates to a system wherein the information received from the information source internal or external to said vehicle or installation comprises depth information to sea floor or submerged object or target.

According to an implementation form, the invention relates to a system wherein the information received from the information source internal or external to said vehicle or installation comprises sea state and sea ice state information.

According to an implementation form, the invention relates to a system wherein said sea ice state information comprises at least one out of sea ice concentration, sea ice drift data, sea ice edge data and iceberg data.

According to an implementation form, the invention relates to a system wherein the information received from the information source internal or external to said vehicle or installation comprises navigation, safety and/or security related information or environmental information.

According to an implementation form, the invention relates to a system further comprising a fourth system for obtaining information about the vehicle or installation and its surroundings.

According to an implementation form, the invention relates to a system wherein the means for processing and combining is a data processing device configured to communicate by wire and/or wirelessly with the systems or sub-systems.

According to an implementation form, the invention relates to a system wherein the information obtained in the systems or sub-systems comprises at least one out of depth information, positional information, shape information, size information and behavioral information of sea floor or objects in the first and second regions or multiple regions. According to an implementation form, the invention relates to a system wherein the behavioral information of an object in the said regions comprises information about at least one out of speed, heading, change in speed and change in heading of that object.

According to an implementation form, the invention relates to a system wherein a data processing apparatus comprises means for performing higher level computation to deliver navigation, safety and security information to said vehicle or installation.

According to an implementation form, the invention relates to a system further comprising means for performing correlation and assessment of data obtained using different systems or sub-systems related to the same object or target or metocean conditions.

According to an implementation form, the invention relates to a system wherein the means for performing correlation and assessment of data are configured to perform correlation and assessment of data related to an AIS (Automatic Identification System) object.

According to an implementation form, the invention relates to a system wherein the systems or sub-systems are configured to perform image processing and co-registering of image data and the system comprises means for distributing the processing across the systems or sub-systems and synthesizing the processing.

According to an implementation form, the invention relates to a system wherein a system and/or sensor health management and/or monitoring can be employed.

According to an implementation form, the invention relates to a data processing device or apparatus comprising means for receiving information from an ocean surface layer observing subsystem, one or several radar and/or sonar systems, means for processing the received information, means for combining or fusing the received and processed information, means for interpreting said combined information, and means for presenting the interpreted information to a user.

According to an implementation form, the invention relates to a data processing device or apparatus wherein said means for receiving are configured to receive data sets in 3D in space, said means for processing, said means for combining or fusing and said means for interpreting are configured to process, combine or fuse and interpret data sets in 3D in space, and said means for presenting the information are configured to present the information in 3D in space.

According to an implementation form, the invention relates to a data processing device or apparatus wherein said means for receiving, means for processing, means for combining, means for fusing, means for interpreting and means for presenting are configured to receive, process, combine, fuse, interpret and present real-time data sets.

According to an implementation form, the invention relates to a data processing device or apparatus wherein said information received from said systems or sub-systems comprises information about at least depth or one moving object in the vicinity of a vessel, vehicle or installation.

According to an implementation form, the invention relates to a data processing device or apparatus wherein said means for interpreting are configured to determine whether said depth or moving object is within a predetermined region around the vessel, vehicle or installation.

According to an implementation form, the invention relates to a data processing device or apparatus wherein said means for processing are configured to obtain a real image or graphical representation of said depth or object from said information received from said systems or sub-systems.

According to an implementation form, the invention relates to a data processing device or apparatus further comprising means for calculating the speed and direction of said moving object.

According to an implementation form, the invention relates to a data processing device or apparatus wherein said means for calculating the speed and direction of said moving object are further operable to simulate a potential impact between the sea floor or the moving object and said vessel, vehicle or installation and presenting the results of the simulation to said user.

According to an implementation form, the invention relates to a data processing device or apparatus wherein said information received from said system or sub-system further comprises information about marine meteorological and oceanographic (metocean) conditions in the vicinity of the vessel, vehicle or installation.

According to an implementation form, the invention relates to a data processing device or apparatus wherein said data processing device or apparatus comprises means for recording an error when the presented information is incorrect.

According to an implementation form, the invention relates to a data processing device or apparatus further comprising means for receiving software for upgrading the data processing device or apparatus and correcting the error.

According to an implementation form, the invention relates to a method wherein said receiving, processing, combining, fusing, interpreting and presenting are performed on three-dimensional data sets.

According to an implementation form, the invention relates to a method wherein the three-dimensional data sets comprise data in three dimensions in space.

According to an implementation form, the invention relates to a method wherein said data sets in three dimensions in space are updated in real-time.

According to an implementation form, the invention relates to a method wherein the update frequency of the data sets varies in accordance with the source of the data set.

According to an implementation form, the invention relates to a method wherein interpreting the information comprises detecting data indicative of ocean depth or an object in the vicinity of a vessel, vehicle or platform and tracking said object.

According to an implementation form, the invention relates to a method wherein interpreting the information comprises calculating the speed and heading of said moving object.

According to an implementation form, the invention relates to a method wherein said interpreting further comprises simulating a potential impact of the sea floor or moving object and said vessel, vehicle or platform and presenting the results of the simulation to said user.

According to an implementation form, the invention relates to a method wherein interpreting the information comprises analyzing data indicating the metocean conditions in the vicinity of a marine vessel.

According to an implementation form, the invention relates to a method wherein interpreting the information comprises detecting data indicative of ocean depth in the vicinity of a vehicle.

According to an implementation form, the invention relates to a computer program product comprising instructions that when executed by a processor causes the processor to perform the method.

According to an implementation form, the invention relates to a device operable to receive information from a plurality of information sources and configured to provide a graphical user interface for viewing information about the surrounding ocean surface layer of a vessel, vehicle or installation from the plurality of information sources, the graphical user interface allowing a user to see a view of a 3D scene of the vessel, vehicle or platform and its environment.

According to an implementation form, the invention relates to a device wherein said 3D scene is a scene including three dimensions in space.

According to an implementation form, the invention relates to a device wherein the GUI is configured to update the 3D scene with time.

According to an implementation form, the invention relates to a device wherein the 3D scene comprises a plurality of sections and each section comprises data from a different information source of the plurality of data sources and wherein the GUI is configured to update the data in each section independently of the other sections.

According to an implementation form, the invention relates to a device wherein the view of said 3D scene can be adjusted responsive to user input in order to show the 3D scene from any direction.

According to an implementation form, the invention relates to a device wherein the graphical user interface is configured to display depth data and/or object data and/or metocean data and/or a data quality measure on which the representations are based.

According to an implementation form, the invention relates to a device further comprising means for defining an alarm zone, the alarm zone covering a predetermined region of said 3D scene, and means for analyzing the information from the information sources to detect any depth or objects located in the alarm zone.

According to an implementation form, the invention relates to a device wherein the graphical user interface is operable, responsive to the means for analyzing information to detect depth or an object located in the alarm zone, to open a window showing a graphical representation of depth or an object located in said alarm zone and to show numerical information about said object.

According to an implementation form, the invention relates to a device wherein the GUI further allows a user to record an error in the information in the major and minor view.

According to an implementation form, the invention relates to a computer program for a data processing device operable to receive information from a plurality of information sources, the computer program comprising computer executable instructions that when executed by the data processing device causes the data processing device to provide a graphical user interface for viewing information about the surroundings of a vessel, vehicle or platform from the plurality of information sources.

According to an implementation form, the invention relates to a device or apparatus for a marine vessel, vehicle or installation comprising a laser sensor for obtaining information about objects in a portion of the depth of the ocean in a region around the marine vessel, vehicle or installation.

According to an implementation form, the invention relates to a device or apparatus further comprising at least one out of a thermal sensor, a laser sensor, an infrared sensor, and a hyper-/multi-spectral sensor.

According to an implementation form, the invention relates to a device or apparatus for a marine vessel, vehicle or installation comprising means for automatically detecting an intruder, and means for transmitting information about an intruder to a graphical user interface.

According to an implementation form, the invention relates to a device or apparatus wherein the means for automatically detecting an intruder comprises means for detecting an intruder both at and below the surface of the water.

According to an implementation form, the invention relates to a sensor and/or sensor exploitation system that can have a number of application areas related to the maritime environment. These can include vessel safety and security, offshore energy projects, coastal and river applications. A feature of the invention can relate to fully utilize the electromagnetic radiation in a narrow part of the visible range that e.g. permits the transmission of light through a significant body of water, e.g. 5-50m by means of an active imaging process. This feature can further be enhanced by having a complement of adjunct sensors that can be tailored to the application, e.g. for ship security. An active ladar can be complemented with passive optical imagers for long range operation and visual characterization and dedicated radar extraction method for complementary object detection of targets on the surface. The invention can therefore include a dedicated data fusion process to provide 3D and time domain fusion of the signals and the appropriate interface and presentation tools.

The invention can relate to range gated active illumination optical target detection and imaging systems. This can imply that the invention relates to a system that utilizes active illumination in the form of coded laser emissions, e.g. in the form of a modulated solid state laser, and provides detection by having a very high speed data acquisition system and signal processing implementation to generate range profiles. Also mechanical scanning systems can be included to allow for area scanning and to generate 3D data. Furthermore precision position registration can be included via a satellite positioning and inertial measurement to allow for operation of the sensor in moving or oscillating environments. Additionally, the usage of passive optical sensors in the visible and infrared wavelength bands can be included, also the use of microwave radars and the use of data fusion schemes.

The invention can relate to security and safety for maritime vessels and platforms which can imply that the operators desire to have knowledge of objects in the seas around the vessel. This can include in particular objects that are not seen from the surface and which may be at a depth that could harm the vessel. The invention can relate to the implementation of a sensor that can combine the capabilities of a radar to detect objects over a considerable distance and the capabilities of an active optical system using wavelengths that can penetrate the ocean surface to see deeply submerged targets.

According to an implementation form, the invention relates to a system for detecting, tracking and classifying objects on or under the sea surface in the vicinity of maritime vessels and maritime platforms utilizing active laser illumination sensors in the conjunction with active radar sensors and passive electro-optical sensors for the purpose of providing situation awareness and the detection of specific objects of interest or threat to the vessel as defined by a dedicated central processing system, comprising the design and operation of the active laser illumination sensor using an electromagnetic wavelength that can significantly penetrate the water surface while illuminating the water surface at a very oblique angle thus obtaining near surface and submerged target detection at significant range using the inherent properties of the air/water interface to by refractive and scattering processes to accept the incoming near horizontal illumination and causing bundles of light at nearer vertical angles to propagate into the water column, and upon reflection from objects to be reradiated in the upwards direction and be again refracted and scattered into the near horizontal direction and being received and processed by a receiving apparatus and therewith also being combined with additional data from passive optical systems which give data from the same surface and in particular providing additional detection and classification of surface and near surface objects and also being combined with data from an active radar sensor that can give detection and verification of surface objects only although thereby enhancing the capabilities of the system in certain forms of inclement weather and at large ranges. The overall combined implementation can provide an area coverage limited by a sector up to a full 360 degree coverage and from a range adjacent to the vessel or platform and up to a distance range limited by the physical capabilities of the system and giving detection from the surface and to a depth limited by physical characteristics thus providing a full 3D coverage of the surrounding water surface and near surface area from the platform or the vessel.

According to an implementation form, the invention relates to a system where the active laser illumination system utilizes a coded waveform to allow for high average power and maximum detection range.

According to an implementation form, the invention relates to a system where the active laser illumination system utilizes a code which is concurrent and using code waveform technologies derived from communication and satellite positioning systems.

According to an implementation form, the invention relates to a system where the active laser illumination system utilizes a coded waveform with a high switching frequency to allow for range discrimination and filtering of unwanted echoes.

According to an implementation form, the invention relates to a system where the active laser illumination system utilizes an interrupted waveform superimposed on the coded waveform to allow filtering and cancellation of echoes close to the laser sensor unit.

According to an implementation form, the invention relates to a system where the active laser illumination is selected to be on or near an optimum wavelength of 488nm to give maximum penetration depth.

According to an implementation form, the invention relates to a system where maximum penetration is achieved to more than 5m and up to 50m providing physical conditions allow.

According to an implementation form, the invention relates to a system where maximum penetration is achieved to more than 50m providing physical conditions allow.

According to an implementation form, the invention relates to a system where the laser energy is concentrated into a narrow beam which extends to an angular coverage not significantly exceeding the dimensions of the typical objects being detected.

According to an implementation form, the invention relates to a system where the laser energy is concentrated into a narrow beam which is shaped in an oval form that allows for range-azimuth equal resolution cells when illuminating a sea patch at large distance.

According to an implementation form, the invention relates to a system wherein the optical receiver system comprises an optical receiving apparatus with a beam which is nearly as narrow as the transmitted beam to only register light from the active laser thereby suppressing ambient light.

According to an implementation form, the invention relates to a system wherein the receiving system has a very narrow band filter to suppress ambient light thus causing limitation to the detection range at wavelengths that can otherwise influence the detector.

According to an implementation form, the invention relates to a system wherein the receiving system utilizes concurrent pulse compression to provide range profiles in real time to the data processor.

According to an implementation form, the invention relates to a system wherein the combined receiving and transmitting optics perform a scanning operation in the vertical plane thereby mapping a specific sector in range and in depth.

According to an implementation form, the invention relates to a system wherein the combined receiving and transmitting optics perform a scanning operation in the vertical plane thereby mapping a specific sector in range and in depth.

According to an implementation form, the invention relates to a system wherein the combined receiving and transmitting optics perform a scanning operation in the horizontal plane thereby mapping a specific sector in azimuth and in depth.

According to an implementation form, the invention relates to a system wherein the combined receiving and transmitting optics perform a scanning operation in the horizontal plane as well as in the vertical plane thereby mapping a specific sector in azimuth, range and in depth thereby constituting a 3D system.

According to an implementation form, the invention relates to a system wherein the subsystem further comprises at least one out of a thermal sensor, a laser, an infrared sensor and a hyper-/multi-spectral sensor.

According to an implementation form, the invention relates to a system wherein the active laser system is supplemented with a coaxial to the laser system passive imaging visual band imager for additional data capture of surface and near surface objects.

According to an implementation form, the invention relates to a system wherein the active laser system is supplemented with a coaxial to the laser system passive near infrared, medium infrared or long wave infrared imager for additional data capture of surface and near surface objects under conditions of sunlight, dim light and very low light operation.

According to an implementation form, the invention relates to a system wherein the active laser system is supplemented with a set of cameras with panoramic view for additional data capture of surface and near surface objects under conditions of sunlight, dim light and very low light operation.

According to an implementation form, the system uses a narrow scanning beam, is designed for eye-safety, uses a slant incidence, uses a non-pulsed waveform, employs specific scanning patterns, applies an ambient light removal, and/or uses precision pointing.

According to an implementation form, the system can discriminate between range along the sea surface and depth under the water. It can apply precision pointing, employ a narrow laser beam, provide a high range resolution, and/or measure range as well as elevation precisely.

According to an implementation form, the system uses polarization for sunlight suppression and/or uses dual polarization for enhanced detection.

According to an implementation form, a laser detection and ranging device can be used as a single sensor for detecting objects on, above or under the water surface.

According to an implementation form, a laser detection and ranging (ladar) device is used for object detection, e.g. a floating container.

According to an implementation form, a light detection and ranging (lidar) device is used for object detection, in particular distributed object detection, e.g. for oil and/or gas detection.

The research leading to these results has received funding from the European Community's Seventh Framework Programme FP7/2007-2013 under grant agreement n° 286220.

### REFERENCE LIST

- 100: System for monitoring a maritime environment
- 101: Data processing device
- 103: Communication interface
- 105: Processor
- 107: Detection device
- 109: Detection device
- 111: Communication network
- 113: Display device

- 200: Method for monitoring a maritime environment
- 201: Detecting objects in the maritime environment
- 203: Receiving detection signals
- 205: Determining locations of the objects

- 300A: Diagram
- 300B: Diagram
- 301: Object
- 303: Object
- 305: Water surface
- 307: Marine seagoing vessel

- 401: Sensor unit
- 403: Sensor unit
- 405: Data processor unit
- 407: Display unit
- 409: System console unit
- 411: Radar unit
- 413: Radar unit
- 415: Gyro unit
- 417: GPS unit
- 419: AIS unit
- 421: Compass unit
- 423: System operator
- 425: System engineer
- 501: Laser unit
- 503: Auxiliary sensor unit
- 505: Mechanical scan unit
- 507: Real-time motion reference unit
- 509: Real-time control unit
- 511: Power supply unit
- 513: A/D conversion unit

- 601: Data processor core unit
- 603: Ethernet network card unit
- 605: Serial interface unit
- 607: Fiber / Ethernet switch unit
- 609: Bridge switch unit
- 611: Ship sensor unit
- 613: Data, monitoring and control signal line
- 615: Data, monitoring and control signal line
- 617: Observation signal line
- 619: Observation signal line

- 701: Visualization unit
- 703: Interaction unit
- 705: Keyboard-video-mouse switch unit
- 707: Display unit
- 709: Mouse unit

- 801: Keyboard-mouse-touch unit
- 803: Command generator unit
- 805: Network card unit
- 807: Display control unit
- 809: Display unit

- 901: Ship structure
- 903: Interface
- 905: Interface
- 907: Interface
- 909: Interface
- 911: Interface
- 913: Interface
- 915: Interface
- 917: Interface

- 1001: Ladar unit
- 1003: Visual mirror
- 1005: Visual window
- 1007: IR / BIL unit
- 1009: IR mirror
- 1011: IR window
- 1013: Mirror drive unit
- 1015: Cam unit
- 1017: Cam unit
- 1019: Control, IMU and power unit

- 1101: FPGA unit
- 1103: RAM unit
- 1105: A/D conversion unit
- 1107: A/D conversion unit
- 1109: CPU unit
- 1111: RAM unit
- 1113: FLASH unit
- 1115: Ethernet unit
- 1117: IMU unit
- 1119: Scan controller unit
- 1121: Step motor drive unit
- 1123: Step motor drive unit
- 1125: Piezo drive unit
- 1127: Piezo drive unit

- 1201: Ideal circular laser beam
- 1203: Divergent circular laser beam
- 1205: Divergent oval laser beam
- 1301: Horizon line
- 1303: Elevation line
- 1305: Elevation line
- 1307: Elevation line
- 1309: Elevation line
- 1311: Elevation line
- 1313: Front direction line
- 1315: Aft direction line
- 1317: Further aft direction line
- 1319: Starboard direction line
- 1321: Port direction line
- 1323: Radar coverage area

- 1401: Ladar coverage area
- 1403: Ladar coverage area

- 1501: Ladar coverage area
- 1503: Ladar coverage area
- 1505: Ladar coverage area

- 1601: Visual band coverage area
- 1603: Visual band coverage area
- 1605: Visual band coverage area
- 1607: Visual band coverage area
- 1609: Visual band coverage area

- 1701: Infrared coverage area
- 1703: Infrared coverage area

## Claims

1. A system (100) for monitoring a maritime environment, the system (100) comprising:
a plurality of detection devices (107, 109) for detecting objects (301, 303) in the maritime environment, the detection devices (107, 109) being configured for object detection according to different object detection schemes; and
a data processing device (101), comprising a communication interface (103) and a processor (105), wherein the communication interface (103) is configured to receive detection signals from the detection devices (107, 109), and wherein the processor (105) is configured to determine locations of the objects (301, 303) in the maritime environment upon the basis of the received detection signals within a common coordinate system.

2. The system (100) of claim 1, wherein the plurality of detection devices (107, 109) comprises at least one of the following detection devices: a laser detection and ranging device, a radio detection and ranging device, a sound navigation and ranging device, a thermal sensor device, an infrared sensor device, a multispectral sensor device, a hyper-spectral sensor device, a visual band imager, or a camera.

3. The system (100) of any of the preceding claims, wherein the communication interface (103) is further configured to receive a location signal indicating a location of an object via a communication network (111), and wherein the processor (105) is further configured to determine the location of the object in the maritime environment upon the basis of the location signal within the common coordinate system.

4. The system (100) of any of the preceding claims, wherein the processor (105) is further configured to determine a speed, a change of speed, a heading, or a change of heading of the objects (301, 303).

5. The system (100) of any of the preceding claims, wherein the processor (105) is further configured to determine an estimate of a location of an object (301, 303) with regard to a predetermined future time instant.

6. The system (100) of any of the preceding claims, wherein the processor (105) is further configured to determine a presence of an object (301, 303) within a predetermined alarm zone, and wherein the processor (105) is further configured to generate an alarm signal if the object (301, 303) is present within the predetermined alarm zone.

7. The system (100) of any of the preceding claims, wherein the system (100) further comprises a display device (113), and wherein the display device (113) is configured to display the locations of the objects (301, 303) in the maritime environment within the common coordinate system.

8. The system (100) of claim 7, wherein the communication interface (103) is further configured to receive a signal indicating environmental information, in particular meteorological and oceanographic information, via a communication network (111), and wherein the display device (113) is configured to display the environmental information within the common coordinate system.

9. The system (100) of claim 7 or 8, wherein the communication interface (103) is further configured to receive a signal indicating object information, in particular an object identification, via a communication network (111), wherein the object information is associated to an object (301, 303) in the maritime environment, and wherein the display device (113) is configured to display the object information.

10. The system (100) of any of the preceding claims, wherein the common coordinate system is a 3-dimensional Cartesian coordinate system.

11. The system (100) of any of the preceding claims, wherein at least one of the plurality of detection devices (107, 109) is configured to scan the maritime environment on or above the water surface (305), in particular to detect objects (301, 303) on or above the water surface (305), for providing a detection signal.

12. The system (100) of any of the preceding claims, wherein at least one of the plurality of detection devices (107, 109) is configured to scan the maritime environment under the water surface (305), in particular to detect objects (301, 303) under the water surface (305), for providing a detection signal.

13. The system (100) of any of the preceding claims, wherein at least one of the plurality of detection devices (107, 109) is configured to successively or simultaneously detect objects (301, 303) in the maritime environment for providing a detection signal.

14. A method (200) for monitoring a maritime environment, the method (200) comprising:
Detecting (201) objects (301, 303) in the maritime environment according to different object detection schemes;
Receiving (203) detection signals; and
Determining (205) locations of the objects (301, 303) in the maritime environment upon the basis of the received detection signals within a common coordinate system.

15. A computer program for performing the method (200) of claim 14 when executed on a computer.
